(19) **Europäisches Patentamt**
**European Patent Office**
**Office européen des brevets**

(11) **EP 4 207 662 A1**

(12) **EUROPEAN PATENT APPLICATION**
published in accordance with Art. 153(4) EPC

(43) Date of publication:
**05.07.2023 Bulletin 2023/27**

(21) Application number: **21871515.9**

(22) Date of filing: **23.09.2021**

(51) International Patent Classification (IPC):
**H04L 5/00** (2006.01)

(52) Cooperative Patent Classification (CPC):
**H04L 5/00; H04W 72/12**

(86) International application number:
**PCT/CN2021/119745**

(87) International publication number:
**WO 2022/063146 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2020 CN 202011022279**

(71) Applicant: **SHANGHAI LANGBO
COMMUNICATION TECHNOLOGY
COMPANY LIMITED
Shanghai 200240 (CN)**

(72) Inventors:
• **LIU, Zheng
  Shanghai 201206 (CN)**
• **ZHANG, Xiaobo
  Shanghai 201206 (CN)**

(74) Representative: **Zhang, Fan
  Am Quälenberg 3A
  38124 Braunschweig (DE)**

(54) **METHOD AND APPARATUS FOR NODE IN WIRELESS COMMUNICATION**

(57)    The present application discloses a method and apparatus for a node in wireless communication. Said method comprises: a node receiving a first information block and monitoring a first control channel candidate; the first information block is used to determine M1 control channel candidates, the first control channel candidate is one among the M1 control channel candidates, and a second control channel candidate is a control channel candidate occupying the same CCE as that of the first control channel candidate, the first control channel candidate and the second control channel candidate have the same scrambling, and the size of the format of DCI carried by the first control channel candidate is the same as the size of the format of DCI carried by the second control channel candidate, the index of the first control channel candidate is not equal to the index of the second control channel candidate, and the association state of the second control channel candidate is used to determine whether the second control channel candidate is counted into monitoring times. The present application improves the PDCCH performance.

FIG. 1

## Description

## TECHNICAL FIELD

The present application relates to transmission methods and devices in wireless communication systems, and in particular to a scheme and device for transmitting control channels in wireless communications.

## BACKGROUND

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The work Item (WI) of NR was approved at the 3GPP RAN #75 session to standardize the NR.

The multi-antenna (e.g., Multiple Input Multiple Output, abbreviated as MIMO, multi-Transmission Reception Point (multi-TRP), and multi-pannel) techniques make up an integral part in the New Radio (NR) technique. To adapt to more diversified application scenarios and meet higher requirements, a Work Item (WI) on further enhancement of MIMO for NR was approved at the 3GPP RAN #86 to provide support for multi-antenna communications which is more robust, with higher spectral efficiency and more application scenarios.

## SUMMARY

In a multi-antenna system, like the Multi-Transmission Reception Point (Multi-TRP) communications, the robustness of transmission can be enhanced in a way that a same channel or signal is transmitted through multiple transmission reception points. The Multi-TRP transmission of a data channel is supported in Rel-16, and the 3GPP planned to introduce the Multi-TRP transmission of a control channel in Rel-17.

To address the issue of transmission of control channels in a multi-antenna system, the present application provides a solution. It should be noted that the statement in the present application only takes the multi-antenna system, especially a multi-TRP transmission system, as a typical application scenario or example; This disclosure is also applicable to other scenarios confronting similar problems, such as scenarios having higher demands on the robustness or coverage of control channels, or in need of PDCCH-linked scenario apart from multi-TRP transmissions, which include but are not limited to coverage enhancement system, the Internet of Things (IoT), Ultra Reliable Low Latency Communications (URLLC) network and Vehicle-to-Everything (V2X), where similar technical effects can be achieved. Additionally, the adoption of a unified solution for various scenarios, including but not limited to multi-antenna systems, contributes to the reduction of hardcore complexity and costs. In the case of no conflict, the embodiments of a first node and the characteristics in the embodiments may be applied to a second node, and vice versa. Particularly, for interpretations of the terminology, nouns, functions and variants (unless otherwise specified) in the present application, refer to definitions given in TS36 series, TS38 series and TS37 series of 3GPP specifications.

The present application provides a method in a first node for wireless communications, comprising:

receiving a first information block, the first information block being used to determine M1 control channel candidates, and any control channel candidate among the M1 control channel candidates occupying at least one CCE, M1 being a positive integer greater than 1; and

monitoring a first control channel candidate, the first control channel candidate being one of the M1 control channel candidates;

herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, with the linking status of the second control channel candidate being used to determine whether the second control channel candidate is counted into the number of monitoring times, the way of PDCCH transmission in cases of multi-TRP or multi-pannel is thus taken into account when counting a number of times of PDCCH Candidate monitoring, therefore, while avoiding the number of times of PDCCH Candidate monitoring that goes beyond the UE capability or an increase of the complexity of PDCCH reception, the capability of PDCCH candidate monitoring can be taken full advantage of, the probability of PDCCH blocking can be reduced and the scheduling flexibility can be increased.

In one embodiment, the linking status of the second control channel candidate comprises at least one of whether the second control channel candidate is linked with a control channel candidate, a control channel candidate linked with the second control channel candidate or a linking type of the second control channel candidate, which enables consideration of the processing of a receiver of PDCCH when computing the complexity of PDCCH Candidate monitoring (e.g., whether soft combining is supported), so that the number of times of PDCCH Candidate monitoring can change along with the method of PDCCH processing, thus ensuring that the complexity of PDCCH Candidate monitoring is not enhanced and the PDCCH transmission performance can be improved.

According to one aspect of the present application, the above method is characterized in that when the second control channel candidate is linked with a control channel candidate other than the second control channel candidate, Quasi-Colocation (QCL) of a reference signal comprised in the second control channel candidate is different from QCL of a reference signal comprised in the control channel candidate linked with the second control channel candidate.

According to one aspect of the present application, the above method is characterized in that an index of a control resource set (CORESET) applied by a search space set to which the first control channel candidate belongs and an index of a CORESET applied by a search space set to which the second control channel candidate belongs are the same; a value of a carrier indicator field comprised in DCI carried by the first control channel candidate is equal to a value of a carrier indicator field comprised in DCI carried by the second control channel candidate.

According to one aspect of the present application, the above method is characterized in that when a search space set to which the first control channel candidate belongs and a search space set to which the second control channel candidate belongs are the same, an index of the first control channel candidate is an index of the first control channel candidate in the search space set to which it belongs, and an index of the second control channel candidate is an index of the second control channel candidate in the search space set to which it belongs; when a search space set to which the first control channel candidate belongs and a search space set to which the second control channel candidate belongs are different, an index of the first control channel candidate is equal to an index of the search space set to which the first control channel candidate belongs, and an index of the second control channel candidate is equal to an index of the search space set to which the second control channel candidate belongs.

According to one aspect of the present application, the above method is characterized in comprising:

transmitting a second information block;
herein, the second information block is used to indicate at least one of whether the first node supports two control channel candidates being mutually linked or a linking type supported by the first node for mutually linked control channel candidates.

In one embodiment, the introduction of a second information block enables a UE to report to the network the processing capability of a PDCCH in multi-TRP or multi-panel cases, thus the network can optimize the way of transmitting the PDCCH, and the PDCCH transmission efficiency can be improved while fulfilling the requests of the UE.

According to one aspect of the present application, the above method is characterized in that the first information block is used to determine that the second control channel candidate and a third control channel candidate are linked, and the first information block is used to determine a linking type between the second control channel candidate and the third control channel candidate, the third control channel candidate being a control channel candidate other than the second control channel candidate; there exists overlapping time-domain resources between time-domain resources indicated by DCI carried by the second control channel candidate and time-domain resources indicated by DCI carried by the third control channel candidate.

In one embodiment, a first information block indicates that the second control channel candidate and a third control channel candidate are linked and a linking type, which maximizes the flexibility of PDCCH configuration in the case of multi-TRP or multi-panel, thus enabling the PDCCH configuration to switch between different modes (such as soft combining and multi-chance transmission), hence the balance reached between diversity gains and reduced blockage of multi-TRP, and an optimization of the PDCCH configuration.

According to one aspect of the present application, the above method is characterized in that each CCE occupied by the first control channel candidate and the second control channel candidate belongs to a target time window in time domain, and a total number of times of monitoring counted by the first node in the target time window is no greater than a first threshold, the first threshold being a positive integer greater than 1; a subcarrier spacing of subcarriers occupied by the first control channel candidate in frequency domain is used to determine the first threshold.

The present application provides a method in a second node for wireless communications, comprising:

transmitting a first information block, the first information block being used to indicate M1 control channel candidates, and any control channel candidate among the M1 control channel candidates occupying at least one CCE, M1 being a positive integer greater than 1; and
determining a first control channel candidate, the first control channel candidate being one of the M1 control channel candidates;

herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

According to one aspect of the present application, the above method is characterized in that when the second control channel candidate is linked with a control channel candidate other than the second control channel candidate, Quasi-Colocation (QCL) of a reference signal comprised in the second control channel candidate is different from QCL of a reference signal comprised in the control channel candidate linked with the second control channel candidate.

According to one aspect of the present application, the above method is characterized in that an index of a control resource set (CORESET) applied by a search space set to which the first control channel candidate belongs and an index of a CORESET applied by a search space set to which the second control channel candidate belongs are the same; a value of a carrier indicator field comprised in DCI carried by the first control channel candidate is equal to a value of a carrier indicator field comprised in DCI carried by the second control channel candidate.

According to one aspect of the present application, the above method is characterized in that when a search space set to which the first control channel candidate belongs and a search space set to which the second control channel candidate belongs are the same, an index of the first control channel candidate is an index of the first control channel candidate in the search space set to which it belongs, and an index of the second control channel candidate is an index of the second control channel candidate in the search space set to which it belongs; when a search space set to which the first control channel candidate belongs and a search space set to which the second control channel candidate belongs are different, an index of the first control channel candidate is equal to an index of the search space set to which the first control channel candidate belongs, and an index of the second control channel candidate is equal to an index of the search space set to which the second control channel candidate belongs.

According to one aspect of the present application, the above method is characterized in comprising:

receiving a second information block;
herein, the second information block is used to indicate at least one of whether a transmitter transmitting the second information block supports two control channel candidates being mutually linked or a linking type supported by the transmitter transmitting the second information block for mutually linked control channel candidates.

According to one aspect of the present application, the above method is characterized in that the first information block is used to indicate that the second control channel candidate and a third control channel candidate are linked, and the first information block is used to indicate a linking type between the second control channel candidate and the third control channel candidate, the third control channel candidate being a control channel candidate other than the second control channel candidate; there exists overlapping time-domain resources between time-domain resources indicated by DCI carried by the second control channel candidate and time-domain resources indicated by DCI carried by the third control channel candidate.

According to one aspect of the present application, the above method is characterized in that each CCE occupied by the first control channel candidate and the second control channel candidate belongs to a target time window in time domain, and a total number of times of monitoring counted by a monitor for the first control channel candidate in the target time window is no greater than a first threshold, the first threshold being a positive integer greater than 1; a subcarrier spacing of subcarriers occupied by the first control channel candidate in frequency domain is used to determine the first threshold.

The present application provides a first node for wireless communications, comprising:

a first transceiver, receiving a first information block, the first information block being used to determine M1 control channel candidates, and any control channel candidate among the M1 control channel candidates occupying at least one CCE, M1 being a positive integer greater than 1; and
a first receiver, monitoring a first control channel candidate, the first control channel candidate being one of the M1 control channel candidates;
herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

The present application provides a second node for wireless communications, comprising:

a second transceiver, transmitting a first information block, the first information block being used to indicate M1 control channel candidates, and any control channel candidate among the M1 control channel candidates occupying at least one CCE, M1 being a positive integer greater than 1; and
a first transmitter, determining a first control channel candidate, the first control channel candidate being one of the M1 control channel candidates;
herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, the method in the present application has the following advantages:

- by adopting the method in the present application, the way of PDCCH transmission in cases of multi-TRP or multi-pannel is thus taken into account when counting a number of times of PDCCH Candidate monitoring, therefore, while avoiding the number of times of PDCCH Candidate monitoring that goes beyond the UE capability or an increase of the complexity of PDCCH reception, the capability of PDCCH candidate monitoring can be taken full advantage of, the probability of PDCCH blocking can be reduced and the scheduling flexibility can be increased;
- by adopting the method in the present application, the processing of a receiver of PDCCH is taken into account when computing the complexity of PDCCH Candidate monitoring (e.g., whether soft combining is supported), so that the number of times of PDCCH Candidate monitoring can change along with the method of processing PDCCH, thus ensuring that the complexity of PDCCH Candidate monitoring is not enhanced and the PDCCH transmission performance can be improved.
- by adopting the method in the present application, a UE is able to report to the network the processing capability of a PDCCH in multi-TRP or multi-pannel cases, thus the network can optimize the way of transmitting the PDCCH, and the PDCCH transmission efficiency can be improved while fulfilling the requests of the UE;
- the method in the present application maximizes the flexibility of PDCCH configuration in the case of multi-TRP or multi-pannel, thus enabling the PDCCH configuration to switch between different modes (such as soft combining and multi-occasion transmission), hence the balance reached between diversity gains and reduced blockage of multi-TRP, and an optimization of the PDCCH configuration.

**BRIEF DESCRIPTION OF THE DRAWINGS**

Other features, objects and advantages of the present application will become more apparent from the detailed description of non-restrictive embodiments taken in conjunction with the following drawings:

FIG. 1 illustrates a flowchart of a first information block and a first control channel candidate according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first node and a second node according to one embodiment of the present application.
FIG. 5 illustrates a flowchart of radio signal transmission according to one embodiment of the present application.
FIG. 6 illustrates a schematic diagram of QCL of a second control channel candidate according to one embodiment of the present application.
FIG. 7 illustrates a schematic diagram illustrating a relation between a first control channel candidate and a second control channel candidate according to one embodiment of the present application.

FIG. 8 illustrates a schematic diagram illustrating a relation between an index of a first control channel candidate and an index of a second control channel candidate according to one embodiment of the present application.

FIG. 9 illustrates a schematic diagram illustrating a relation between a second control channel candidate and a third control channel candidate according to one embodiment of the present application.

FIG. 10 illustrates a schematic diagram of a first threshold according to one embodiment of the present application.

FIG. 11 illustrates a structure block diagram of a processing device in a first node according to one embodiment of the present application.

FIG. 12 illustrates a structure block diagram of a processing device in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

## Embodiment 1

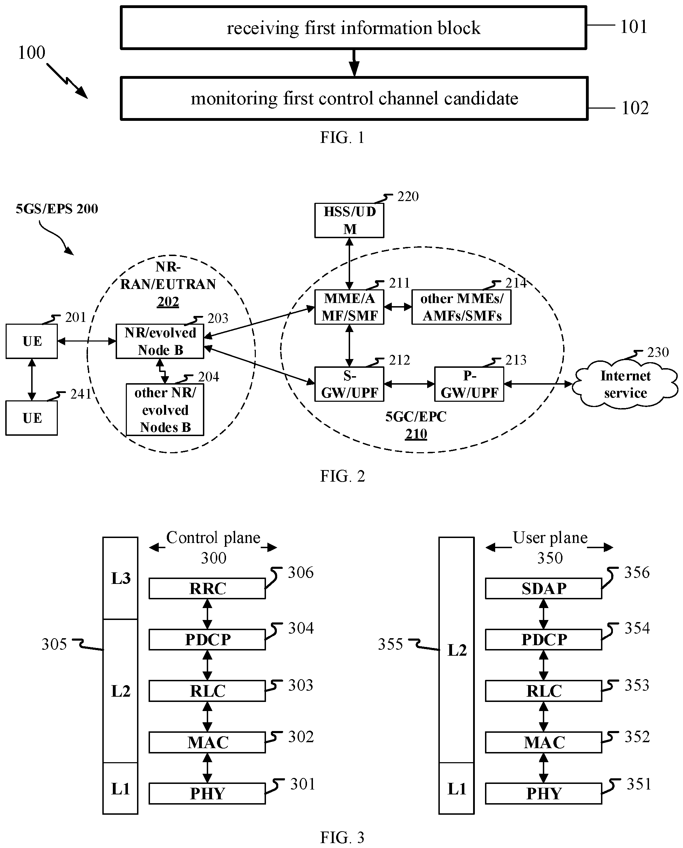

Embodiment 1 illustrates a flowchart of a first information block and a first control channel candidate according to one embodiment of the present application, as shown in FIG. 1. In FIG. 1, each step represents a step, it should be particularly noted that the sequence order of each box herein does not imply a chronological order of steps marked respectively by these boxes.

In Embodiment 1, the first node in the present application receives a first information block in step 101, the first information block being used to determine M1 control channel candidates, and any control channel candidate among the M1 control channel candidates occupying at least one CCE, M1 being a positive integer greater than 1; and the first node in the present application monitors a first control channel candidate in step 102, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, the first information block is transmitted via an air interface.

In one embodiment, the first information block is transmitted via a radio interface.

In one embodiment, the first information block comprises all or part of a higher layer signaling.

In one embodiment, the first information block comprises all or part of a physical layer signaling.

In one embodiment, the first information block comprises all or part of a Radio Resource Control (RRC) signaling.

In one embodiment, the first information block comprises all or part of a Medium Access Control (MAC) layer signaling.

In one embodiment, the first information block comprises all or part of a System Information Block (SIB).

In one embodiment, the first information block is transmitted through a Downlink Shared Channel (DL-SCH).

In one embodiment, the first information block is transmitted through a Physical Downlink Shared Channel (PDSCH).

In one embodiment, the first information block is Cell Specific.

In one embodiment, the first information block is UE-specific.

In one embodiment, the first information block is configured Per Serving Cell.

In one embodiment, the first information block comprises all or partial fields in a Downlink Control Information (DCI) signaling.

In one embodiment, the first information block comprises more than one sub-information-block, and each sub-information-block comprised in the first information block is an Information Element (IE) or a field in an RRC signaling to which the first information block belongs; a sub-information-block comprised in the first information block is used to indicate the M1 control channel candidates.

In one embodiment, the first information block comprises a field "CORESETPoolIndex" in an Information Element (IE) "ControlResourceSet" in an RRC signaling.

In one embodiment, the first information block comprises all or partial fields in an Information Element (IE) "PDCCH-Config" in an RRC signaling.

In one embodiment, the first information block comprises all or partial fields in an Information Element (IE) "ControlResourceSet" in an IE "PDCCH-Config" in an RRC signaling.

In one embodiment, the first information block comprises all or partial fields in an Information Element (IE) "SearchSpace" in an RRC signaling.

In one embodiment, the above sentence that "the first information block being used to determine M1 control channel candidates" comprises the following meaning: the first information block is used by the first node in the present application for determining the M1 control channel candidates.

In one embodiment, the above sentence that "the first information block being used to determine M1 control channel candidates" comprises the following meaning: the first information block is used for explicitly indicating the M1 control channel candidates.

In one embodiment, the above sentence that "the first information block being used to determine M1 control channel candidates" comprises the following meaning: the first information block is used for implicitly indicating the M1 control channel candidates.

In one embodiment, "the first information block being used to determine M1 control channel candidates" comprises the following meaning: The first information block is used to determine N1 control channel candidates, any control channel candidate among the M1 control channel candidates being one of the N1 control channel candidates, where N1 is a positive integer greater than M1; the M1 is no greater than the first threshold in the present application, the first threshold being used to determine the M1 control channel candidates from the N1 control channel candidates.

In one embodiment, any one of the M1 control channel candidates occupies a positive integer number of Control Channel Element(s) (CCE(s)) in time-frequency domain.

In one embodiment, a number of Control Channel Element(s) (CCE(s)) occupied by any one of the M1 control channel candidates is equal to one of 1, 2, 4, 8 or 16.

In one embodiment, any one of the M1 control channel candidates is a Physical Downlink Control Channel (PDCCH) Candidate.

In one embodiment, any one of the M1 control channel candidates is a monitored Physical Downlink Control Channel Candidate (Monitored PDCCH Candidate).

In one embodiment, any one of the M1 control channel candidates is a Physical Downlink Control Channel (PDCCH) Candidate that adopts one or more DCI formats.

In one embodiment, any one of the M1 control channel candidates is a Physical Downlink Control Channel (PDCCH) Candidate that adopts one or more DCI Payload Sizes.

In one embodiment, any one of the M1 control channel candidates is a time-frequency resource set that carries specific DCIs of one or more formats.

In one embodiment, the M1 control channel candidates comprise two control channel candidates occupying the same time-frequency resources.

In one embodiment, CCEs occupied by any two control channel candidates among the M1 control channel candidates are different.

In one embodiment, among the M1 control channel candidates there are two control channel candidates occupying a same CCE set.

In one embodiment, monitoring of the first control channel candidate refers to Decoding of the first control channel candidate.

In one embodiment, monitoring of the first control channel candidate refers to Blind Decoding of the first control channel candidate.

In one embodiment, monitoring of the first control channel candidate refers to decoding and CRC checking of the first control channel candidate.

In one embodiment, monitoring of the first control channel candidate refers to decoding of the first control channel candidate and Radio Network Temporary Identity (RNTI)-scrambled CRC checking.

In one embodiment, monitoring of the first control channel candidate refers to Decoding of the first control channel candidate based on monitored Downlink Control Information (DCI) Format(s).

In one embodiment, monitoring of the first control channel candidate refers to Decoding of the first control channel candidate based on one or more Format(s) of monitored Downlink Control Information (DCI).

In one embodiment, the first control channel candidate is any one of the M1 control channel candidates.

In one embodiment, the first control channel candidate is a specific one of the M1 control channel candidates.

In one embodiment, the first control channel candidate is one of the M1 control channel candidates that has a smallest index.

In one embodiment, the first control channel candidate is one of the M1 control channel candidates other than the control channel candidate that has a smallest index.

In one embodiment, the first node in the present application also monitors a control channel candidate other than the first control channel candidate among the M1 control channel candidates.

In one embodiment, the first node in the present application only monitors the first control channel candidate among the M1 control channel candidates.

In one embodiment, a number of times that the first node in the present application monitors the M1 control channel candidates is less than M1.

In one embodiment, a number of times that the first node in the present application monitors the M1 control channel candidates is equal to M1.

In one embodiment, a number of times that the first node in the present application monitors the M1 control channel candidates is greater than M1.

In one embodiment, the first node in the present application monitors the second control channel candidate.

In one embodiment, the first node in the present application does not monitor the second control channel candidate.

In one embodiment, the first node in the present application monitors the second control channel candidate, the second control channel candidate being counted for monitoring.

In one embodiment, the first node in the present application does not monitor the second control channel candidate, the second control channel candidate being not counted for monitoring.

In one embodiment, the first node in the present application monitors the second control channel candidate, the second control channel candidate being not counted for monitoring.

In one embodiment, whether the second control channel candidate is counted for monitoring is related to whether the first node in the present application monitors the second control channel candidate.

In one embodiment, whether the second control channel candidate is counted for monitoring is unrelated to whether the first node in the present application monitors the second control channel candidate.

In one embodiment, the second control channel candidate is one of the M1 control channel candidates.

In one embodiment, the second control channel candidate is a control channel candidate other than the M1 control channel candidates.

In one embodiment, the second control channel candidate occupies a positive integer number of CCE(s).

In one embodiment, the second control channel candidate occupies a positive integer number of CCE(s), the CCE(s) occupied by the second control channel candidate being totally the same as that/those occupied by the first control channel candidate.

In one embodiment, the second control channel candidate and the first control channel candidate occupy a same CCE set.

In one embodiment, the second control channel candidate and the first control channel candidate occupy totally the same time-frequency domain resources in time-frequency domain.

In one embodiment, any CCE occupied by the second control channel candidate is also occupied by the first control channel candidate, and any CCE occupied by the first control channel candidate is also occupied by the second control channel candidate.

In one embodiment, CCE(s) occupied by the second control channel candidate and CCE(s) occupied by the first control channel candidate are totally overlapped.

In one embodiment, the first control channel candidate and the second control channel candidate belong to a same Search Space Set.

In one embodiment, the first control channel candidate and the second control channel candidate respectively belong to two different Search Space Sets.

In one embodiment, a Control Resource Set (CORESET) corresponding to a Search Space Set to which the first control channel candidate belongs and a CORESET corresponding to a Search Space Set to which the second control channel candidate belongs are the same.

In one embodiment, the statement in the claims that "the first control channel candidate and the second control channel candidate have identical scrambling" comprises the following meaning: a first scrambling sequence is a scrambling sequence of a PDCCH carried by the first control channel candidate, while a second scrambling sequence is a scrambling sequence of a PDCCH carried by the second control channel candidate, the first scrambling sequence and the second scrambling sequence being the same.

In one embodiment, the statement in the claims that "the first control channel candidate and the second control channel candidate have identical scrambling" comprises the following meaning: a first scrambling sequence is a scrambling sequence of a PDCCH carried by the first control channel candidate, while a second scrambling sequence is a scrambling sequence of a PDCCH carried by the second control channel candidate, where elements in the first scrambling sequence and elements in the second scrambling sequence are the same in one-to-one correspondence.

In one embodiment, the statement in the claims that "the first control channel candidate and the second control channel candidate have identical scrambling" comprises the following meaning: a first scrambling sequence is a scrambling sequence of a PDCCH carried by the first control channel candidate, while a second scrambling sequence is a scrambling sequence of a PDCCH carried by the second control channel candidate, where an initial value of a Generator for the first scrambling sequence and an initial value of a Generator for the second scrambling sequence are the same.

In one embodiment, the statement in the claims that "the first control channel candidate and the second control channel candidate have identical scrambling" comprises the following meaning: the first node in the present application assumes that the first control channel candidate and the second control channel candidate have identical scrambling.

In one embodiment, the statement in the claims that "the first control channel candidate and the second control channel candidate have identical scrambling" comprises the following meaning: a first scrambling sequence is a scrambling sequence of a PDCCH carried by the first control channel candidate, while a second scrambling sequence is a scrambling sequence of a PDCCH carried by the second control channel candidate, where an initial value of a generating register for the first scrambling sequence and an initial value of a generating register for the second scrambling sequence are the same.

In one embodiment, the statement in the claims that "the first control channel candidate and the second control channel candidate have identical scrambling" comprises the following meaning: a first scrambling sequence is a scrambling sequence of a PDCCH carried by the first control channel candidate, while a second scrambling sequence is a scrambling sequence of a PDCCH carried by the second control channel candidate, where the first scrambling sequence and the second scrambling sequence are generated by a same Gold Sequence with the length of 31 using a same initial value of a Generator.

In one embodiment, the statement in the claims that "the first control channel candidate and the second control channel candidate have identical scrambling" comprises the following meaning: the first node in the present application assumes that a first bit block having been through scrambling of a first scrambling sequence is used for generating a physical channel carried by the first control channel candidate, and the first node in the present application assumes that a second bit block having been through scrambling of a second scrambling sequence is used for generating a physical channel carried by the second control channel candidate, the first scrambling sequence and the second scrambling sequence being the same; the first bit block comprises more than one bit, and the second bit block comprises more than one bit. In one subsidiary embodiment of the above embodiment, the first bit block is an output by DCI through Channel Coding and Rate Matching, while the second bit block is an output by DCI through Channel Coding and Rate Matching. In one subsidiary embodiment of the above embodiment, the first bit block being through scrambling of the first scrambling sequence is before Modulation, while the second bit block being through scrambling of the first scrambling sequence is before Modulation. In one subsidiary embodiment of the above embodiment, a physical channel carried by the first control channel candidate is generated by the first bit block sequentially through scrambling of the first scrambling sequence, modulation, Mapping to physical resources, Orthogonal Frequency Division Multiplexing baseband signal generation, and Modulation and Upconversion, while a physical channel carried by the second control channel candidate is generated by the second bit block sequentially through scrambling of the second scrambling sequence, modulation, Mapping to physical resources, Orthogonal Frequency Division Multiplexing baseband signal generation, and Modulation and Upconversion.

In one embodiment, the statement in the claims that "a size of a format of DCI carried by the first control channel candidate is the same as a size of a format of DCI carried by the second control channel candidate" comprises the following meaning: the first node in the present application assumes that the Size of the Format of DCI carried by the first control channel candidate and the Size of the Format of DCI carried by the second control channel candidate are the same.

In one embodiment, the statement in the claims that "a size of a format of DCI carried by the first control channel candidate is the same as a size of a format of DCI carried by the second control channel candidate" comprises the following meaning: a size of a DCI Payload carried by the first control channel candidate and a size of a DCI Payload carried by the second control channel candidate are the same.

In one embodiment, the statement in the claims that "a size of a format of DCI carried by the first control channel candidate is the same as a size of a format of DCI carried by the second control channel candidate" comprises the following meaning: a number of bits comprised in the format of DCI carried by the first control channel candidate and a number of bits comprised in the format of DCI carried by the second control channel candidate are equal.

In one embodiment, the statement in the claims that "a size of a format of DCI carried by the first control channel candidate is the same as a size of a format of DCI carried by the second control channel candidate" comprises the following meaning: a number of bits comprised in a DCI Payload carried by the first control channel candidate and a number of bits comprised in a DCI Payload carried by the second control channel candidate are equal.

In one embodiment, a Format of DCI carried by the first control channel candidate and a Format of DCI carried by the second control channel candidate are the same.

In one embodiment, a Format of DCI carried by the first control channel candidate and a Format of DCI carried by the second control channel candidate are different.

In one embodiment, a Format of DCI carried by the first control channel candidate is one of 0_2 or 1_2.

In one embodiment, a Format of DCI carried by the first control channel candidate is one of 0_2, 0_3, 1_2 or 1_3.

In one embodiment, a Format of DCI carried by the first control channel candidate is one of 0_1, 0 2, 0_3, 1_1, 1_2 or 1_3.

In one embodiment, a Format of DCI carried by the first control channel candidate is one of 0_1, 0_2, 1_1 or 1_2.

In one embodiment, a Format of DCI carried by the first control channel candidate is one of DCI Formats that can be supported.

In one embodiment, a Format of DCI carried by the first control channel candidate is one of DCI Formats that are supported by a UE-Specific Search Set (USS set).

In one embodiment, a Format of DCI carried by the second control channel candidate is one of 0_2 or 1_2.

In one embodiment, a Format of DCI carried by the second control channel candidate is one of 0_2, 0_3, 1_2 or 1_3.

In one embodiment, a Format of DCI carried by the second control channel candidate is one of 0_1, 0_2, 0_3, 1_1, 1_2 or 1_3.

In one embodiment, a Format of DCI carried by the second control channel candidate is one of 0_1, 0_2, 1_1 or 1_2.

In one embodiment, a Format of DCI carried by the second control channel candidate is one of DCI Formats that are supported by a UE-Specific Search Set (USS set).

In one embodiment, an index of the first control channel candidate is an index of the first control channel candidate in a search space set to which the first control channel candidate belongs.

In one embodiment, an index of the first control channel candidate is an index of a search space set to which the first control channel candidate belongs.

In one embodiment, the first control channel candidate belongs to a first search space set, the first search space set comprising R1 control channel candidates in a first time window, the R1 control channel candidates are sequentially indexed, and the first control channel candidate is one of the R1 control channel candidates, and an index of the first control channel candidate is an index of the first control channel candidate among the R1 control channel candidates, R1 being a positive integer greater than 1, where the first time window comprises a positive integer number of time-domain symbol(s). In one subsidiary embodiment of the above embodiment, the first time window is a slot. In one subsidiary embodiment of the above embodiment, the first time window is a span. In one subsidiary embodiment of the above embodiment, the first time window is a Monitoring Occasion (MO). In one subsidiary embodiment of the above embodiment, the R1 is equal to a configurable positive integer, or the R1 is equal to a pre-defined positive integer. In one subsidiary embodiment of the above embodiment, the first information block in the present application is used for indicating the R1.

In one embodiment, an index of the first control channel candidate is an index of a starting CCE occupied by the first control channel candidate.

In one embodiment, an index of the first control channel candidate is an index of a starting REG comprised in a starting CCE occupied by the first control channel candidate.

In one embodiment, an index of the first control channel candidate is an index of an ending CCE occupied by the first control channel candidate.

In one embodiment, an index of the first control channel candidate is an index of a CORESET to which CCE(s) occupied by the first control channel candidate belongs/belong.

In one embodiment, an index of the second control channel candidate is an index of the second control channel candidate in a search space set to which the second control channel candidate belongs.

In one embodiment, an index of the second control channel candidate is an index of a search space set to which the second control channel candidate belongs.

In one embodiment, the second control channel candidate belongs to a second search space set, the second search space set comprising R2 control channel candidates in a second time window, the R2 control channel candidates are sequentially indexed, and the second control channel candidate is one of the R2 control channel candidates, and an index of the second control channel candidate is an index of the second control channel candidate among the R2 control channel candidates, R2 being a positive integer greater than 1, where the second time window comprises a positive integer number of time-domain symbol(s). In one subsidiary embodiment of the above embodiment, the second time window is a slot. In one subsidiary embodiment of the above embodiment, the second time window is a span. In one subsidiary embodiment of the above embodiment, the second time window is a Monitoring Occasion (MO). In one subsidiary embodiment of the above embodiment, the R2 is equal to a configurable positive integer, or the R2 is equal to a pre-defined positive integer. In one subsidiary embodiment of the above embodiment, the first information block in the present application is used for indicating the R2.

In one embodiment, an index of the second control channel candidate is an index of a starting CCE occupied by the second control channel candidate.

In one embodiment, an index of the second control channel candidate is an index of a starting REG comprised in a starting CCE occupied by the second control channel candidate.

In one embodiment, an index of the second control channel candidate is an index of an ending CCE occupied by the second control channel candidate.

In one embodiment, an index of the second control channel candidate is an index of a CORESET to which CCE(s) occupied by the second control channel candidate belongs/belong.

In one embodiment, an index of the first control channel candidate is larger than an index of the second control channel candidate.

In one embodiment, an index of the first control channel candidate is smaller than an index of the second control channel candidate.

In one embodiment, an index of the first control channel candidate is greater than 0.

In one embodiment, an index of the first control channel candidate can be equal to 0.

In one embodiment, an index of the first control channel candidate is a non-negative integer.

In one embodiment, an index of the second control channel candidate is a non-negative integer.

In one embodiment, an index of the first control channel candidate is an integer.

In one embodiment, an index of the second control channel candidate is an integer.

In one embodiment, the statement in the claims that "a linking status of the second control channel candidate is used to determine whether the second control channel candidate is counted for monitoring" comprises the following meaning: a linking status of the second control channel candidate is used by the first node in the present application to determine whether the second control channel candidate is counted for monitoring.

In one embodiment, the statement in the claims that "a linking status of the second control channel candidate is used to determine whether the second control channel candidate is counted for monitoring" comprises the following meaning: a linking status of the second control channel candidate is used by the second node in the present application to determine whether the second control channel candidate is counted for monitoring.

In one embodiment, a linking status of the second control channel candidate comprises whether the second control channel candidate is linked with a control channel candidate, a control channel candidate linked with the second control channel candidate and a linking type of the second control channel candidate.

In one embodiment, a linking status of the second control channel candidate only comprises whether the second control channel candidate is linked with a control channel candidate.

In one embodiment, a linking status of the second control channel candidate only comprises a control channel candidate linked with the second control channel candidate.

In one embodiment, a linking status of the second control channel candidate only comprises a linking type of the second control channel candidate.

In one embodiment, a linking status of the second control channel candidate only comprises whether the second control channel candidate is linked with a control channel candidate and a control channel candidate linked with the second control channel candidate.

In one embodiment, a linking status of the second control channel candidate only comprises whether the second control channel candidate is linked with a control channel candidate and a linking type of the second control channel candidate.

In one embodiment, a linking status of the second control channel candidate only comprises a control channel candidate linked with the second control channel candidate and a linking type of the second control channel candidate.

In one embodiment, the statement in the claims that "whether the second control channel candidate is linked with a control channel candidate" comprises the following meaning: whether the second control channel candidate is linked with a control channel candidate other than the second control channel candidate.

In one embodiment, the statement in the claims that "whether the second control channel candidate is linked with a control channel candidate" comprises the following meaning: the first node in the present application assumes whether the second control channel candidate is linked with a control channel candidate other than the second control channel candidate.

In one embodiment, the statement in the claims that "whether the second control channel candidate is linked with a control channel candidate" comprises the following meaning: whether the second control channel candidate is linked with a control channel candidate having an index unequal to that of the second control channel candidate.

In one embodiment, the statement in the claims that "whether the second control channel candidate is linked with a control channel candidate" comprises the following meaning: whether the first node in the present application can assume that a Payload of DCI carried by the first control channel candidate is the same as a Payload of DCI carried by the second control channel candidate.

In one embodiment, the statement in the claims that "whether the second control channel candidate is linked with a control channel candidate" comprises the following meaning: whether the first node in the present application can assume that the first control channel candidate and a control channel candidate other than the first control channel candidate can be Soft Combining.

In one embodiment, the statement in the claims that "whether the second control channel candidate is linked with a control channel candidate" comprises the following meaning: whether a Payload and an Aggregation Level (AL) of DCI carried by the first control channel candidate are respectively the same as a Payload and an AL of DCI carried by a control channel candidate other than the first control channel candidate.

In one embodiment, the statement in the claims that "whether the second control channel candidate is linked with a control channel candidate" means whether there exists the third control channel candidate in the claim 6 in the present application.

In one embodiment, the statement in the claims that "whether the second control channel candidate is linked with a control channel candidate" comprises the following meaning: whether there is an overlap of time-domain resources between time-domain resources indicated by DCI carried by the second control channel candidate and time-domain resources indicated by DCI carried by a control channel candidate other than the second control channel candidate.

In one embodiment, the statement in the claims that "whether the second control channel candidate is linked with a control channel candidate" comprises the following meaning: whether DCI carried by the second control channel candidate and DCI carried by a control channel candidate other than the second control channel candidate are used for scheduling a same signal or channel.

In one embodiment, the statement in the claims that "whether the second control channel candidate is linked with a control channel candidate" comprises the following meaning: whether DCI carried by the second control channel candidate and DCI carried by a control channel candidate other than the second control channel candidate are used for scheduling a same Physical Downlink Shared Channel (PDSCH) or Physical Uplink Shared Channel (PUSCH).

In one embodiment, the statement in the claims that "whether the second control channel candidate is linked with a control channel candidate" comprises the following meaning: whether DCI carried by the second control channel candidate and DCI carried by a control channel candidate other than the second control channel candidate are used for triggering a same Reference Signal (RS).

In one embodiment, the statement in the claims that "whether the second control channel candidate is linked with a control channel candidate" comprises the following meaning: whether DCI carried by the second control channel candidate and DCI carried by a control channel candidate other than the second control channel candidate are used for scheduling a same Transport Block (TB).

In one embodiment, the statement in the claims that "whether the second control channel candidate is linked with a control channel candidate" comprises the following meaning: whether DCI carried by the second control channel candidate and DCI carried by a control channel candidate other than the second control channel candidate are two repetitions of transmission of a same DCI.

In one embodiment, the statement in the claims that "whether the second control channel candidate is linked with a control channel candidate" comprises the following meaning: whether DCI carried by the second control channel candidate and DCI carried by a control channel candidate other than the second control channel candidate are two separate transmissions of scheduling information of a same Transport Block (TB).

In one embodiment, the statement in the claims that "whether the second control channel candidate is linked with a control channel candidate" comprises the following meaning: whether DCI carried by the second control channel candidate and DCI carried by a control channel candidate other than the second control channel candidate are two transmissions among Multi-Chance transmissions of scheduling information of a same Transport Block (TB).

In one embodiment, the statement in the claims that "whether the second control channel candidate is linked with a control channel candidate" comprises the following meaning: whether an index of the second control channel candidate is linked/associated with an index of a control channel candidate other than the second control channel candidate.

In one embodiment, the statement in the claims that "whether the second control channel candidate is linked with a control channel candidate" comprises the following meaning: whether there is a mapping relation between an index of the second control channel candidate and an index of a control channel candidate other than the second control channel candidate.

In one embodiment, the statement in the claims that "whether the second control channel candidate is linked with a control channel candidate" comprises the following meaning: whether there is a functional relation between an index of the second control channel candidate and an index of a control channel candidate other than the second control channel candidate.

In one embodiment, the statement in the claims that "whether the second control channel candidate is linked with a control channel candidate" comprises the following meaning: whether CCE(s) occupied by the second control channel candidate and CCE(s) occupied by a control channel candidate other than the second control channel candidate are linked/associated.

In one embodiment, the first information block in the present application is used for indicating whether the second control channel candidate is linked with a control channel candidate.

In one embodiment, the first transceiver receives a third information block, the third information block indicating whether the second control channel candidate is linked with a control channel candidate.

In one embodiment, a linking type of the second control channel candidate refers to a linking type between the second control channel candidate and a control channel candidate linked with the second control channel candidate.

In one embodiment, a linking type of the second control channel candidate comprises a way of combining between the second control channel candidate and a control channel candidate linked with the second control channel candidate.

In one embodiment, a linking type of the second control channel candidate comprises whether Soft Combining is supported in Combining between a PDCCH transmitted by the second control channel candidate and a PDCCH transmitted by a control channel candidate linked with the second control channel candidate.

In one embodiment, a linking type of the second control channel candidate is one of a first linking type or a second linking type, the first linking type comprising a linking between control channel candidates that support Soft Combining, and the second linking type comprising a linking between control channel candidates that do not support Soft Combining.

In one embodiment, a linking type of the second control channel candidate is one of a first linking type or a second linking type, the first linking type comprising a linking between control channel candidates that support Soft Combining, and the second linking type comprising a linking between control channel candidates for Multi-chance DCI transmission.

In one embodiment, a linking type of the second control channel candidate is one of a first linking type or a second linking type, the first linking type comprising a Repetition of transmission of a DCI, and the second linking type comprising two separate transmissions of two DCIs.

In one embodiment, a linking type of the second control channel candidate is one of a first linking type or a second linking type, the first linking type comprising that two Repetitions of a same DCI can be assumed to be carried, and the second linking type comprising that two Repetitions of a same DCI cannot be assumed to be carried.

In one embodiment, the statement in the claims that "a linking status of the second control channel candidate is used to determine whether the second control channel candidate is counted for monitoring" comprises the following meaning: when the second control channel candidate is linked with a control channel candidate other than the second control channel candidate, the second control channel candidate is counted into the number of monitoring times; when the second control channel candidate is not linked with any control channel candidate other than the second control channel candidate, the second control channel candidate is not counted into the number of monitoring times.

In one embodiment, the statement in the claims that "a linking status of the second control channel candidate is used to determine whether the second control channel candidate is counted for monitoring" comprises the following meaning: when a linking type of the second control channel candidate is a first linking type, the second control channel candidate is counted into the number of monitoring times; when a linking type of the second control channel candidate is a second linking type, the second control channel candidate is not counted into the number of monitoring times; the first linking type and the second linking type are different. In one subsidiary embodiment of the above embodiment, the first linking type comprises that two Repetitions of a same DCI can be assumed to be carried, and the second linking type comprises that two Repetitions of a same DCI cannot be assumed to be carried. In one subsidiary embodiment of the above embodiment, the first linking type comprises a Repetition of transmission of a DCI, and the second linking type comprises two separate transmissions of two DCIs. In one subsidiary embodiment of the above embodiment, the first linking type comprises a linking between control channel candidates that support Soft Combining, and the second linking type comprises a linking between control channel candidates for Multi-chance DCI transmission. In one subsidiary embodiment of the above embodiment, the first linking type comprises a linking between control channel candidates that support Soft Combining, and the second linking type comprises a linking between control channel candidates that do not support Soft Combining. In one subsidiary embodiment of the above embodiment, the first linking type and the second linking type are configurable or pre-defined.

In one embodiment, the statement in the claims that "a linking status of the second control channel candidate is used to determine whether the second control channel candidate is counted for monitoring" comprises the following meaning: whether a control channel candidate linked with the second control channel candidate includes the first control channel candidate is used to determine whether the second control channel candidate is counted into the number of monitoring times.

In one embodiment, the statement in the claims that "a linking status of the second control channel candidate is used to determine whether the second control channel candidate is counted for monitoring" comprises the following meaning: when a control channel candidate linked with the second control channel candidate includes the first control channel candidate, the second control channel candidate is not counted into the number of monitoring times; when a control channel candidate linked with the second control channel candidate only includes a control channel candidate other than the first control channel candidate, the second control channel candidate is counted into the number of monitoring times.

In one embodiment, the statement in the claims that "a linking status of the second control channel candidate is used to determine whether the second control channel candidate is counted for monitoring" comprises the following meaning: whether a control channel candidate linked with the second control channel candidate includes a control channel candidate linked with the first control channel candidate is used to determine whether the second control channel candidate is counted into the number of monitoring times.

In one embodiment, the statement in the claims that "a linking status of the second control channel candidate is used to determine whether the second control channel candidate is counted for monitoring" comprises the following meaning: when the second control channel candidate is not linked with any control channel candidate other than the second control channel candidate, the second control channel candidate is not counted into the number of monitoring times; when the second control channel candidate is linked with a control channel candidate other than the second control channel candidate, and when the linking type of the second control channel candidate is a first linking type, the second control channel candidate is counted into the number of monitoring times; when the second control channel candidate is linked with a control channel candidate other than the second control channel candidate, and when the linking type of the second control channel candidate is a second linking type, the second control channel candidate is not counted into the number of monitoring times. In one subsidiary embodiment of the above embodiment, the first linking type and the second linking type are different. In one subsidiary embodiment of the above embodiment, the first linking type comprises that two Repetitions of a same DCI can be assumed to be carried, and the second linking type comprises that two Repetitions of a same DCI cannot be assumed to be carried. In one subsidiary embodiment of the above embodiment, the first linking type comprises a Repetition of transmission of a DCI, and the second linking type comprises two separate transmissions of two DCIs. In one subsidiary embodiment of the above embodiment, the first linking type comprises a linking between control channel candidates that support Soft Combining, and the second linking type comprises a linking between control channel candidates for Multi-chance DCI transmission. In one subsidiary embodiment of the above embodiment, the first linking type comprises a linking between control channel candidates that support Soft Combining, and the second linking type comprises a linking between control channel candidates that do not support Soft Combining. In one subsidiary embodiment of the above embodiment, the first linking type and the second linking type are configurable or predefined.

In one embodiment, the statement in the claims that "a linking status of the second control channel candidate is used to determine whether the second control channel candidate is counted for monitoring" comprises the following meaning: when the second control channel candidate is not linked with any control channel candidate other than the second control channel candidate, the second control channel candidate is not counted into the number of monitoring times; when the second control channel candidate is linked with a control channel candidate other than the second control channel candidate, and when the control channel candidate linked with the second control channel candidate includes the first control channel candidate, the second control channel candidate is not counted into the number of monitoring times; when the second control channel candidate is linked with a control channel candidate other than the second control channel candidate, and when the control channel candidate linked with the second control channel candidate does not include the first control channel candidate, the second control channel candidate is counted into the number of monitoring times.

In one embodiment, the statement in the claims that "a linking status of the second control channel candidate is used to determine whether the second control channel candidate is counted for monitoring" comprises the following meaning: when the second control channel candidate is not linked with any control channel candidate other than the second control channel candidate, the second control channel candidate is not counted into the number of monitoring times; when the second control channel candidate is linked with a control channel candidate other than the second control channel candidate, and when the control channel candidate linked with the second control channel candidate includes the first control channel candidate or a control channel candidate linked with the first control channel candidate, the second control channel candidate is not counted into the number of monitoring times; when the second control channel candidate is linked with a control channel candidate other than the second control channel candidate, and when the control channel candidate linked with the second control channel candidate includes neither the first control channel candidate nor a control channel candidate linked with the first control channel candidate, the second control channel candidate is counted into the number of monitoring times.

In one embodiment, the statement in the claims that "a linking status of the second control channel candidate is used to determine whether the second control channel candidate is counted for monitoring" comprises the following meaning: when the second control channel candidate is not linked with any control channel candidate other than the second control channel candidate, the second control channel candidate is not counted into the number of monitoring times; when the second control channel candidate is linked with a control channel candidate other than the second control channel candidate, and when the control channel candidate linked with the second control channel candidate includes the first control channel candidate, the second control channel candidate is not counted into the number of monitoring times; when the second control channel candidate is linked with a control channel candidate other than the second control channel candidate, and when the control channel candidate linked with the second control channel candidate does not include the first control channel candidate, and when the linking type of the second control channel candidate is a first linking type, the second control channel candidate is counted into the number of monitoring times; when the second control channel candidate is linked with a control channel candidate other than the second control channel candidate, and when the control channel candidate linked with the second control channel candidate does not include the first control channel candidate, and when the linking type of the second control channel candidate is a second linking type, the second control channel candidate is not counted into the number of monitoring times. In one subsidiary embodiment of the above embodiment, the first linking type and the second linking type are different. In one subsidiary embodiment of the above embodiment, the first linking type comprises that two Repetitions of a same DCI can be assumed to be carried, and the second linking type comprises that two Repetitions of a same DCI cannot be assumed to be carried. In one subsidiary embodiment of the above embodiment, the first linking type comprises a Repetition of transmission of a DCI, and the second linking type comprises two separate transmissions of two DCIs. In one subsidiary embodiment of the above embodiment, the first linking type comprises a linking between control channel candidates that support Soft Combining, and the second linking type comprises a linking between control channel candidates for Multi-chance DCI transmission. In one subsidiary embodiment of the above embodiment, the first linking type comprises a linking between control channel candidates that support Soft Combining, and the second linking type comprises a linking between control channel candidates that do not support Soft Combining. In one subsidiary embodiment of the above embodiment, the first linking type and the second linking type are configurable or pre-defined.

In one embodiment, the statement in the claims that "whether the second control channel candidate is counted for monitoring" comprises the following meaning: whether the second control channel candidate is at least counted as a PDCCH monitoring.

In one embodiment, the statement in the claims that "whether the second control channel candidate is counted for monitoring" comprises the following meaning: whether the second control channel candidate is at least counted as a PDCCH Blind Decoding (BD).

In one embodiment, the statement in the claims that "whether the second control channel candidate is counted for monitoring" comprises the following meaning: whether the second control channel candidate is at least counted as a monitored PDCCH Candidate.

In one embodiment, the statement in the claims that "whether the second control channel candidate is counted for monitoring" comprises the following meaning: whether the second control channel candidate affect the counting of the number of times of PDCCH Candidate monitorings.

In one embodiment, the statement in the claims that "whether the second control channel candidate is counted for monitoring" comprises the following meaning: whether the second control channel candidate affect the Budget of the number of times of PDCCH Candidate monitorings.

In one embodiment, the first node in the present application does not expect that a control channel candidate linked with the second control channel candidate includes the first control channel candidate.

In one embodiment, the first node in the present application does not expect that a control channel candidate linked with the second control channel candidate includes a control channel candidate linked with the first control channel candidate.

In one embodiment, the first node in the present application does not expect that a control channel candidate linked with the second control channel candidate includes the first control channel candidate or a control channel candidate linked with the first control channel candidate.

In one embodiment, a control channel candidate linked with the first control channel candidate is used to determine whether the second control channel candidate is counted for monitoring.

In one embodiment, a linking type of the first control channel candidate is used to determine whether the second control channel candidate is counted for monitoring.

In one embodiment, a control channel candidate linked with the second control channel candidate includes the third control channel candidate in the present application.

**Embodiment 2**

Embodiment 2 illustrates a schematic diagram of a network architecture according to the present application, as shown in FIG. 2. FIG. 2 is a diagram illustrating a network architecture 200 of 5G NR, Long-Term Evolution (LTE) and Long-Term Evolution Advanced (LTE-A) systems. The 5G NR or LTE network architecture 200 may be called 5G System/Evolved Packet System (5GS/EPS) 200 or other appropriate terms. The 5GS/EPS 200 may comprise one or more UEs 201, an NG-RAN 202, a 5G-Core Network/Evolved Packet Core (5GC/EPC) 210, a Home Subscriber Server/ Unified Data Management (HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR/evolved node B (gNB/eNB) 203 and other gNBs(eNBs) 204. The gNB(eNB) 203 provides UE 201 oriented user plane and control plane terminations. The gNB(eNB) 203 may be connected to other gNBs(eNBs) 204 via an Xn/X2 interface (for example, backhaul). The gNB(eNB) 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB(eNB) 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB(eNB) 203 is connected with the 5G-CN/EPC 210 via an S1/NG interface. The 5G-CN/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/ AMF/ SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 supports multi-TRP transmission.

In one embodiment, the UE 201 supports multi-TRP PDCCH transmission.

In one embodiment, the gNB(eNB) 203 corresponds to the second node in the present application.

In one embodiment, the gNB(eNB) 203 supports multi-TRP transmission.

In one embodiment, the gNB(eNB) 203 supports multi-TRP PDCCH transmission.

## Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 used for a first node (UE or gNB) and a second node (gNB or UE) is represented by three layers, which are a layer 1, a layer 2 and a layer 3, respectively. The layer 1 (L1) is the lowest layer which performs signal processing functions of various PHY layers. The L1 is called PHY 301 in the present application. The layer 2 (L2) 305 is above the PHY 301, and is in charge of the link between the first node and the second node via the PHY 301. The L2 305 comprises a Medium Access Control (MAC) sublayer 302, a Radio Link Control (RLC) sublayer 303 and a Packet Data Convergence Protocol (PDCP) sublayer 304. All the three sublayers terminate at the second nodes of the network side. The PDCP sublayer 304 provides multiplexing among variable radio bearers and logical channels. The PDCP sublayer 304 provides security by encrypting a packet and provides support for handover of a first node between second nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information block in the present application is generated by the RRC306, or the MAC302, or the MAC352, or by the PHY301, or the PHY351.

In one embodiment, the second information block in the present application is generated by the RRC306, or the MAC302, or the MAC352, or by the PHY301, or the PHY351.

In one embodiment, the first control channel candidate in the present application is generated by the PHY301 or the PHY351.

## Embodiment 4

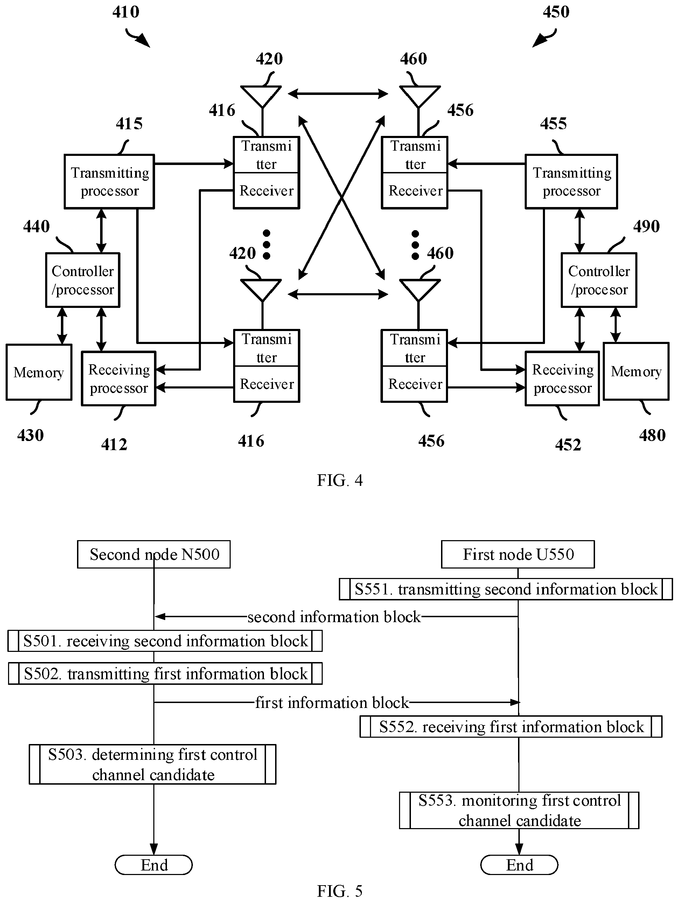

Embodiment 4 illustrates a schematic diagram of a first node and a second node according to the present application, as shown in FIG. 4.

The first node (450) can comprise a controller/processor 490, a data source/buffer 480, a receiving processor 452, a transmitter/receiver 456 and a transmitting processor 455, where the transmitter/receiver 456 comprises an antenna 460.

The second node (410) can comprise a controller/processor 440, a data source/buffer 430, a receiving processor 412, a transmitter/receiver 416 and a transmitting processor 415, where the transmitter/receiver 416 comprises an antenna 420.

In Downlink (DL), a higher layer packet, for instance higher-layer information contained in the first information block in the present application is provided to the controller/processor 440. The controller/processor 440 provides functions of the L2 layer and above. In DL, the controller/processor 440 provides header compression, encryption, packet segmentation and reordering, multiplexing between a logical channel and a transport channel as well as radio resources allocation for the first node 450 based on various priorities. The controller/processor 440 is also responsible for HARQ operation, a retransmission of a lost packet and a signaling to the first node 450, for instance, higher-layer information carried in the first information block is generated in the controller/processor 440. The transmitting processor 415 performs various signal processing functions used for the L1 (that is, PHY), including coding, interleaving, scrambling, modulating, power control/allocating, pre-coding and physical layer control signaling generation, for example, the generation of a physical layer signal of the first information block in the present application is completed in the transmitting processor 415; when the first control channel candidate in the present application is used for transmitting a control signaling, the generation of the transmitted control signaling is completed in the transmitting processor 415. Modulation symbols that have been generated are divided into parallel streams and each of them is mapped onto a corresponding multicarrier subcarrier and/or multicarrier symbol, and then is mapped by the transmitting processor 415 to the antenna 420 via the transmitter 416 to be transmitted in the form of radio frequency signals. At the receiving end, each receiver 456 receives a radio frequency signal via a corresponding antenna 460, and recovers baseband information modulated onto a radio frequency carrier and provides the baseband information to the receiving processor 452. The receiving processor 452 performs various signal receiving processing functions used for the L1. Signal receiving processing functions include receiving a physical layer signal of the first information block and monitoring the first control channel candidate in the present application, and demodulating multicarrier symbols in multicarrier symbol streams based on various modulation schemes (i.e., BPSK, QPSK), then descrambling, decoding and de-interleaving to recover data or control signal transmitted by the second node 410 on a physical channel, and providing the data and control signal to the controller/processor 490. The controller/processor 490 is in charge of the L2 and above layers, the controller/processor 490 interprets the first information block in the present application. The controller/processor can be associated with the memory 480 that stores program code and data; the memory 480 may be called a computer readable medium.

In UL transmission, which is similar to DL, the second information block in the present application, upon generation in the controller/processor 490, is through the transmitting processor 455 to perform signal transmitting processing functions used for the L1(that is, PHY), for instance, physical layer signals carrying the second information block in the present application are generated in the transmitting processor 455, and is then mapped to the antenna 460 via the transmitter 456 from the transmitting processor 455 and transmitted in the form of radio frequency signals. The receiver 416 receives a radio frequency signal via a corresponding antenna 420, and each receiver 416 recovers baseband information modulated onto a radio frequency carrier and provides the baseband information to the receiving processor 412. The receiving processor 412 performs various signal reception processing functions used for L1 (i.e., PHY), including receiving a physical layer signal carrying the second information block in the present application and then providing data and/or control signal to the controller/processor 440. The functionality of the L2 is implemented by the controller/processor 440, including reading the second information block in the present application. The controller/processor can be associated with the buffer 430 that stores program code and data; the buffer 430 may be called a computer readable medium.

In one embodiment, the first node 450 comprises at least one processor and at least one memory, the at least one memory comprises computer program codes; The at least one memory and the computer program codes are configured to be used in collaboration with the at least one processor. The first node 450 at least receives a first information block, the first information block being used to determine M1 control channel candidates, and any control channel candidate among the M1 control channel candidates occupying at least one CCE, M1 being a positive integer greater than 1; and monitors a first control channel candidate, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, the first node 450 comprises a memory that stores a computer readable instruction program, the computer readable instruction program generates actions when executed by at least one processor, which include: receiving a first information block, the first information block being used to determine M1 control channel candidates, and any control channel candidate among the M1 control channel candidates occupying at least one CCE, M1 being a positive integer greater than 1; and monitoring a first control channel candidate, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, the second device 410 comprises at least one processor and at least one memory, the at least one memory comprises computer program codes; the at least one memory and the computer program codes are configured to be used in collaboration with the at least one processor. The second device 410 at least: transmits a first information block, the first information block being used to indicate M1 control channel candidates, and any control channel candidate among the M1 control channel candidates occupying at least one CCE, M1 being a positive integer greater than 1; and determines a first control channel candidate, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate.

didate linked with the second control channel candidate or a linking type of the second control channel candidate.

In one embodiment, the second node 410 comprises a memory that stores a computer readable instruction program, the computer readable instruction program generates actions when executed by at least one processor, which include: transmitting a first information block, the first information block being used to indicate M1 control channel candidates, and any control channel candidate among the M1 control channel candidates occupying at least one CCE, M1 being a positive integer greater than 1; and determining a first control channel candidate, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, the first node 450 is a UE.

In one embodiment, the first node 450 is a UE supporting multi-TRP transmissions.

In one embodiment, the first node 450 is a UE supporting multi-TRP PDCCH transmissions.

In one embodiment, the second node 410 is a base station (gNB/eNB).

In one embodiment, the second node 410 is a base station supporting multi-TRP transmissions.

In one embodiment, the second node 410 is a base station supporting multi-TRP PDCCH transmissions.

In one embodiment, the receiver 456 (comprising the antenna 460), the receiving processor 452 and the controller/processor 490 are used for receiving the first information block in the present application.

In one embodiment, the receiver 456 (comprising the antenna 460) and the receiving processor 452 are used for monitoring the first control channel candidate in the present application.

In one embodiment, the transmitter 456 (comprising the antenna 460), the transmitting processor 455 and the controller/processor 490 are used for transmitting the second information block in the present application.

In one embodiment, the transmitter 416 (comprising the antenna 420), the transmitting processor 415 and the controller/processor 440 are used for transmitting the first information block in the present application.

In one embodiment, the transmitter 416 (comprising the antenna 420) and the transmitting processor 415 are used for determining the first control channel candidate in the present application.

In one embodiment, the receiver 416 (comprising the antenna 420), the receiving processor 412 and the controller/processor 440 are used for receiving the second information block in the present application.

**Embodiment 5**

Embodiment 5 illustrates a flowchart of radio signal transmission according to one embodiment of the present application, as shown in FIG. 5. In FIG. 5, a second node N500 is a maintenance base station for a serving cell for a first node U550. It should be particularly noted that the sequence illustrated herein does not set any limit to the signal transmission order or implementation order in the present application.

The **second node N500** receives a second information block in step S501, transmits a first information block in step S502, and determines a first control channel candidate in step S503.

The **first node U550** transmits a second information block in step S551, receives a first information block in step S552, and monitors a first control channel candidate in step S553.

In Embodiment 5, the first information block in the present application is used to determine the M1 control channel candidates in the present application, any control channel candidate among the M1 control channel candidates occupying at least one CCE, M1 being a positive integer greater than 1; the first control channel candidate in the present application is one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate; the second information block is used to indicate at least one of whether the first node supports two control channel candidates being mutually linked or a linking type supported by the first node for mutually linked control channel candidates.

In one embodiment, the second information block is transmitted via an air interface.

In one embodiment, the second information block is transmitted via a radio interface.

In one embodiment, the second information block comprises all or part of an upper layer signaling.

In one embodiment, the second information block comprises all or part of a physical layer signaling.

In one embodiment, the second information block comprises all or part of a Radio Resource Control (RRC) signaling.

In one embodiment, the second information block comprises all or part of a Medium Access Control (MAC) layer signaling.

In one embodiment, the second information block is transmitted through an Uplink Shared Channel (UL-SCH).

In one embodiment, the second information block is transmitted through a Physical Uplink Shared Channel (PUSCH).

In one embodiment, the second information block is transmitted through a Physical Uplink Control Channel (PUCCH).

In one embodiment, the second information block comprises Uplink control information (UCI).

In one embodiment, the second information block is used to indicate capabilities of the first node in the present application.

In one embodiment, the second information block indicates a capability of the first node for combined decoding of PDCCH in the present application.

In one embodiment, the second information block indicates a capability of the first node for supporting Multi-Chance DCI transmission in the present application.

In one embodiment, the second information block indicates a capability of the first node for supporting two PDCCH Candidates being linked in the present application.

In one embodiment, the second information block indicates a capability of the first node for supporting two PDCCH Candidates in scheduling a same TB in the present application.

In one embodiment, the statement in the claims that "the second information block is used to indicate at least one of whether the first node supports two control channel candidates being mutually linked or a linking type supported by the first node for mutually linked control channel candidates" comprises the following meaning: the second information block is used to indicate whether the first node supports two control channel candidates being linked, and when the first node supports two control channel candidates being linked, the second information block is used to indicate a linking type supported by the first node for the linked control channel candidates.

In one embodiment, the statement in the claims that "the second information block is used to indicate at least one of whether the first node supports two control channel candidates being mutually linked or a linking type supported by the first node for mutually linked control channel candidates" comprises the following meaning: the second information block is only used to indicate whether the first node supports two control channel candidates being linked.

In one embodiment, the statement in the claims that "the second information block is used to indicate at least one of whether the first node supports two control channel candidates being mutually linked or a linking type supported by the first node for mutually linked control channel candidates" comprises the following meaning: the second information block is only used to indicate a linking type between control channel candidates supported by the first node.

In one embodiment, the linking type between control channel candidates includes a Combining type between control channel candidates.

In one embodiment, the linking type between control channel candidates includes a Combining type between PDCCHs carried by control channel candidates.

In one embodiment, the linking type between control channel candidates includes whether soft combining is supported between control channel candidates.

In one embodiment, the linking type between control channel candidates includes whether repetitions of DCI transmission are supported between control channel candidates.

In one embodiment, the linking type between control channel candidates includes whether soft combining or Multi-chance DCI transmission is supported between control channel candidates.

In one embodiment, the linking type between control channel candidates includes whether Multi-chance DCI transmission is supported between control channel candidates.

In one embodiment, the sentence that "the second information block is used to indicate at least one of whether the first node supports two control channel candidates being mutually linked or a linking type supported by the first node for mutually linked control channel candidates" comprises the following meaning: the second information block indicates whether the first node supports soft combining of PDCCHs transmitted by two control channel candidates.

In one embodiment, the sentence that "the second information block is used to indicate at least one of whether the first node supports two control channel candidates being mutually linked or a linking type supported by the first node for mutually linked control channel candidates" comprises the following meaning: the second information block indicates whether the first node supports two control channel candidates in carrying a same DCI payload.

In one embodiment, the sentence that "the second information block is used to indicate at least one of whether the first node supports two control channel candidates being mutually linked or a linking type supported by the first node for mutually linked control channel candidates" comprises the following meaning: the second information block indicates whether the first node supports two control channel candidates in respectively carrying two repetitions of a same DCI payload.

In one embodiment, the sentence that "the second information block is used to indicate at least one of whether the first node supports two control channel candidates being mutually linked or a linking type supported by the first node for mutually linked control channel candidates" comprises the following meaning: the second information block is used by the first node in the present application to indicate at least one of whether the first node supports two control channel candidates being mutually linked or a linking type supported by the first node for mutually linked control channel candidates.

In one embodiment, the sentence that "the second information block is used to indicate at least one of whether the first node supports two control channel candidates being mutually linked or a linking type supported by the first node for mutually linked control channel candidates" comprises the following meaning: the second information block is used to explicitly indicate at least one of whether the first node supports two control channel candidates being mutually linked or a linking type supported by the first node for mutually linked control channel candidates.

In one embodiment, the sentence that "the second information block is used to indicate at least one of whether the first node supports two control channel candidates being mutually linked or a linking type supported by the first node for mutually linked control channel candidates" comprises the following meaning: the second information block is used to implicitly indicate at least one of whether the first node supports two control channel candidates being mutually linked or a linking type supported by the first node for mutually linked control channel candidates.

In one embodiment, the second information block comprises one or more fields in an IE "Phy-Parameters".

### Embodiment 6

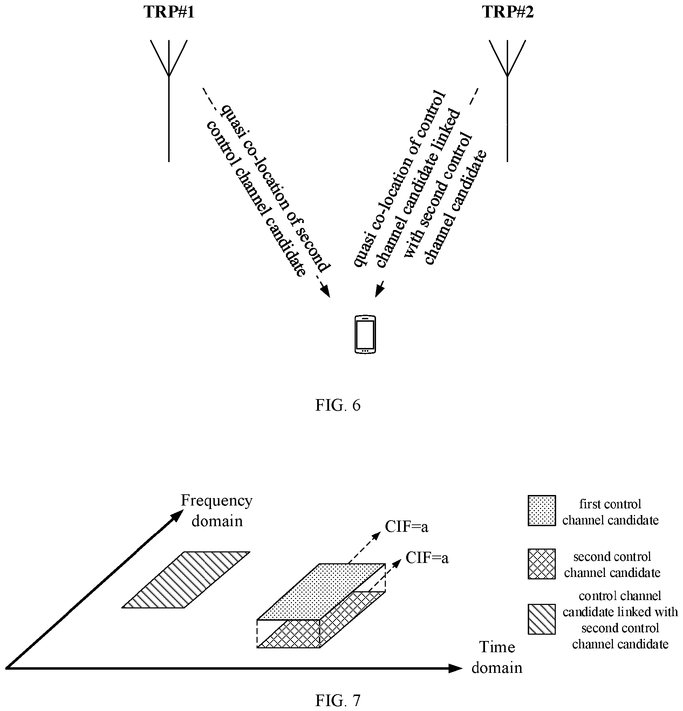

Embodiment 6 illustrates a schematic diagram of QCL of a second control channel candidate according to one embodiment of the present application, as shown in FIG. 6. In FIG. 6, a second control channel candidate and a control channel candidate linked with the second control channel candidate are respectively transmitted from a TRP#1 and a TRP#2.

In Embodiment 6, when the second control channel candidate in the present application is linked with a control channel candidate other than the second control channel candidate, Quasi-Colocation (QCL) of a reference signal comprised in the second control channel candidate is different from QCL of a reference signal comprised in the control channel candidate linked with the second control channel candidate.

In one embodiment, a reference signal comprised in the second control channel candidate and a reference signal comprised in a control channel candidate linked with the second control channel candidate are both Physical Downlink Control Channel (PDCCH) Demodulation Reference Signals (DMRS).

In one embodiment, a reference signal comprised in the second control channel candidate and a reference signal comprised in a control channel candidate linked with the second control channel candidate are both reference signals used for Physical Downlink Control Channel (PDCCH) reception.

In one embodiment, a reference signal comprised in the second control channel candidate and a reference signal comprised in a control channel candidate linked with the second control channel candidate are respectively Quasi Co-Located (QCL) with different reference signals.

In one embodiment, a reference signal comprised in the second control channel candidate and a reference signal comprised in a control channel candidate linked with the second control channel candidate are respectively Quasi Co-Located (QCL) with different antenna ports.

In one embodiment, a reference signal comprised in the second control channel candidate and a reference signal comprised in a control channel candidate linked with the second control channel candidate are respectively Quasi Co-Located (QCL) with reference signals occupying different time-frequency resources.

In one embodiment, a reference signal comprised in the second control channel candidate and a reference signal comprised in a control channel candidate linked with the second control channel candidate are respectively Quasi Co-Located (QCL) with reference signals occupying different time-domain resources.

In one embodiment, a reference signal comprised in the second control channel candidate and a reference signal comprised in a control channel candidate linked with the second control channel candidate are respectively Quasi Co-Located (QCL) with Synchronization Signal/Physical Broadcast Channel (SS/PBCH) Blocks having synchronous indexes.

In one embodiment, a reference signal comprised in the second control channel candidate and a reference signal comprised in a control channel candidate linked with the second control channel candidate are respectively Quasi Co-Located (QCL) with Channel Status Information Reference Signals (CSI-RS) of different antenna ports.

In one embodiment, a reference signal comprised in the second control channel candidate and a reference signal comprised in a control channel candidate linked with the second control channel candidate are respectively Quasi Co-Located (QCL) with Channel Status Information Reference Signals occupying different time-frequency resources.

In one embodiment, the first node in the present application assumes that Quasi-Colocation (QCL) of a reference signal comprised in the second control channel candidate is different from QCL of a reference signal comprised in the control channel candidate linked with the second control channel candidate.

In one embodiment, the first node in the present application cannot assume that Quasi-Colocation (QCL) of a reference signal comprised in the second control channel candidate is the same as QCL of a reference signal comprised in the control channel candidate linked with the second control channel candidate.

In one embodiment, a Transmission Configuration Indication (TCI) State of a reference signal comprised in the second control channel candidate and a TCI State of a reference signal comprised in the control channel candidate linked with the second control channel candidate are different.

In one embodiment, the first node in the present application assumes that a Transmission Configuration Indication (TCI) State of a reference signal comprised in the second control channel candidate and a TCI State of a reference signal comprised in the control channel candidate linked with the second control channel candidate are different.

In one embodiment, the first node in the present application cannot assume that a Transmission Configuration Indication (TCI) State of a reference signal comprised in the second control channel candidate and a TCI State of a reference signal comprised in the control channel candidate linked with the second control channel candidate are the same.

In one embodiment, antenna port quasi co-location of a reference signal comprised in the second control channel candidate and antenna port quasi co-location of a reference signal comprised in the control channel candidate linked with the second control channel candidate are different.

In one embodiment, a QCL type of a reference signal comprised in the second control channel candidate and a QCL type of a reference signal comprised in the control channel candidate linked with the second control channel candidate are different.

In one embodiment, a QCL type of a reference signal comprised in the second control channel candidate and a QCL type of a reference signal comprised in the control channel candidate linked with the second control channel candidate are the same.

In one embodiment, the first transceiver receives a fourth information block, herein, the fourth information block is used to determine a target quasi co-location (QCL) set, the target QCL set comprising more than one antenna port quasi co-location; quasi co-location of a reference signal comprised in the second control channel candidate is an antenna port quasi co-location comprised in the target QCL set, and quasi co-location of a reference signal comprised in the control channel candidate linked with the second control channel candidate is an antenna port quasi co-location comprised in the target QCL set.

In one embodiment, the first control channel candidate and a control channel candidate other than the first control channel candidate are linked.

In one embodiment, the first control channel candidate is linked with a control channel candidate other than the first control channel candidate, Quasi-Colocation (QCL) of a reference signal comprised in the first control channel candidate is different from QCL of a reference signal comprised in the control channel candidate linked with the first control channel candidate.

**Embodiment 7**

Embodiment 7 illustrates a schematic diagram illustrating a relation between a first control channel candidate and a second control channel candidate according to one embodiment of the present application, as shown in FIG. 7. In FIG. 7, the horizontal axis represents time and the vertical axis represents frequency, the rectangle filled with dots represents a first control channel candidate, the rectangle filled with cross lines represents a second control channel candidate, and the rectangle filled with oblique lines represents a control channel candidate linked with the second control channel candidate; values of carrier indicator fields (CIFs) in the first control channel candidate and the second control channel candidate are both equal to a, a being a non-negative integer.

In Embodiment 7, an index of a control resource set (CORESET) applied by a search space set to which the first control channel candidate in the present application belongs and an index of a CORESET applied by a search space set to which the second control channel candidate in the present application belongs are the same; a value of a carrier indicator field comprised in DCI carried by the first control channel candidate is equal to a value of a carrier indicator field comprised in DCI carried by the second control channel candidate.

In one embodiment, a CORESET applied in a search space set to which the first control channel candidate belongs is a CORESET to which CCE(s) occupied by the first control channel candidate belongs(belong).

In one embodiment, a CORESET applied in a search space set to which the first control channel candidate belongs is a CORESET linked with the search space set to which the first control channel candidate belongs.

In one embodiment, a CORESET applied in a search space set to which the first control channel candidate belongs is a CORESET to which the first control channel candidate belongs.

In one embodiment, a CORESET applied in a search space set to which the first control channel candidate belongs is a CORESET to which CCE(s) used by the search space set that the first control channel candidate belongs to belongs.

In one embodiment, an index of a CORESET applied in a search space set to which the first control channel candidate belongs is a non-negative integer.

In one embodiment, an index of a CORESET applied in a search space set to which the first control channel candidate belongs is a CORESET ID.

In one embodiment, a CORESET applied in a search space set to which the second control channel candidate belongs is a CORESET to which CCE(s) occupied by the second control channel candidate belongs(belong).

In one embodiment, a CORESET applied in a search space set to which the second control channel candidate belongs is a CORESET linked with the search space set to which the second control channel candidate belongs.

In one embodiment, a CORESET applied in a search space set to which the second control channel candidate belongs is a CORESET to which the second control channel candidate belongs.

In one embodiment, a CORESET applied in a search space set to which the second control channel candidate belongs is a CORESET to which CCE(s) used by the search space set that the second control channel candidate belongs to belongs.

In one embodiment, an index of a CORESET applied in a search space set to which the second control channel candidate belongs is a non-negative integer.

In one embodiment, an index of a CORESET applied in a search space set to which the second control channel candidate belongs is a CORESET ID.

In one embodiment, the statement in the claims that "a value of a carrier indicator field comprised in DCI carried by the first control channel candidate is equal to a value of a carrier indicator field comprised in DCI carried by the second control channel candidate" comprises the following meaning: the first node in the present application assumes that a value of a carrier indicator field comprised in DCI carried by the first control channel candidate is equal to a value of a carrier indicator field comprised in DCI carried by the second control channel candidate.

In one embodiment, the statement in the claims that "a value of a carrier indicator field comprised in DCI carried by the first control channel candidate is equal to a value of a carrier indicator field comprised in DCI carried by the second control channel candidate" comprises the following meaning: a Serving Cell Index indicated by a carrier indicator field (CIF) comprised in DCI carried by the first control channel candidate and a Serving Cell Index indicated by a CIF comprised in DCI carried by the second control channel candidate are equal.

In one embodiment, the statement in the claims that "a value of a carrier indicator field comprised in DCI carried by the first control channel candidate is equal to a value of a carrier indicator field comprised in DCI carried by the second control channel candidate" comprises the following meaning: an index of a Serving Cell indicated by a carrier indicator field (CIF) comprised in DCI carried by the first control channel candidate is the same as that of a Serving Cell Index indicated by a CIF comprised in DCI carried by the second control channel candidate.

In one embodiment, the statement in the claims that "DCI carried by the first control channel candidate" comprises the following meaning: DCI that the first node in the present application assumes to be carried by the first control channel candidate.

In one embodiment, the statement in the claims that "DCI carried by the first control channel candidate" comprises the following meaning: DCI that the first control channel candidate actually carries.

In one embodiment, the statement in the claims that "DCI carried by the second control channel candidate" comprises the following meaning: DCI that the first node in the present application assumes to be carried by the second control channel candidate.

In one embodiment, the statement in the claims that "DCI carried by the second control channel candidate" comprises the following meaning: DCI that the second control channel candidate actually carries.

In one embodiment, a value of a Carrier Indicator Field (CIF) comprised in DCI carried by the first control channel candidate is equal to an index of a serving cell.

In one embodiment, a value of a Carrier Indicator Field (CIF) comprised in DCI carried by the first control channel candidate is equal to an ID of a serving cell.

In one embodiment, a value of a Carrier Indicator Field (CIF) comprised in DCI carried by the first control channel candidate is equal to an index of a Scheduled Cell.

In one embodiment, a value of a Carrier Indicator Field (CIF) comprised in DCI carried by the first control channel candidate is equal to an ID of a Scheduled Cell.

In one embodiment, a value of a Carrier Indicator Field (CIF) comprised in DCI carried by the first control channel candidate is equal to a $n_{CI}$.

In one embodiment, a value of a Carrier Indicator Field (CIF) comprised in DCI carried by the second control channel candidate is equal to an index of a serving cell.

In one embodiment, a value of a Carrier Indicator Field (CIF) comprised in DCI carried by the second control channel candidate is equal to an ID of a serving cell.

In one embodiment, a value of a Carrier Indicator Field (CIF) comprised in DCI carried by the second control channel candidate is equal to an index of a Scheduled Cell.

In one embodiment, a value of a Carrier Indicator Field (CIF) comprised in DCI carried by the second control channel candidate is equal to an ID of a Scheduled Cell.

In one embodiment, a value of a Carrier Indicator Field (CIF) comprised in DCI carried by the second control channel candidate is equal to a $n_{CI}$.

**Embodiment 8**

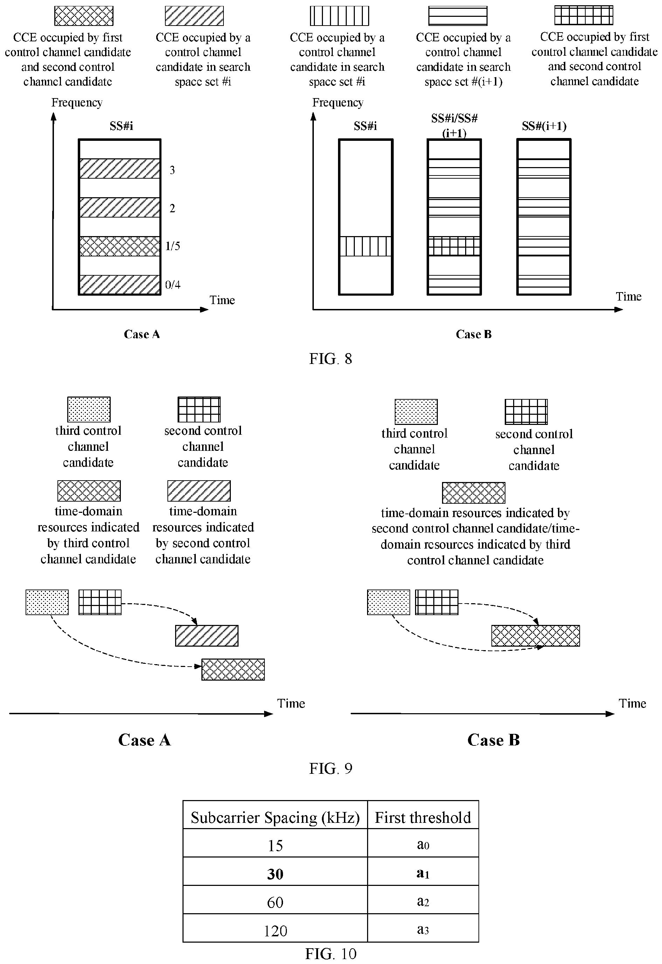

Embodiment 8 illustrates a schematic diagram illustrating a relation between an index of a first control channel candidate and an index of a second control channel candidate according to one embodiment of the present application, as shown in FIG. 8. In FIG. 8, as shown in Case A and Case B, the horizontal axis represents time while the vertical axis represents frequency. In Case A, a first control channel candidate and a second control channel candidate belong to a same search space set #i (SS#i); the rectangle filled with cross lines represents CCEs occupied by the first control channel candidate and the second control channel candidate; each slash-filled rectangle represents CCE(s) occupied by a control channel candidate in SS#i, the figure on the right represents an index of control channel candidate in SS#i; two figures on the right of the cross-filled rectangle respectively represent an index of the first control channel candidate and an index of the second control channel candidate; in Case B, a first control channel candidate and a second control channel candidate respectively belong to a search space set #i (SS#i) and a search space set #(i+1) (SS#(i+1)); each rectangle filled with vertical lines represents CCE(s) occupied by a control channel candidate in SS#i, and each rectangle filled with horizontal lines represents CCE(s) occupied by a control channel candidate in SS#(i+1), and the rectangle filled with reticles represents CCEs occupied by the first control channel candidate and the second control channel candidate.

In Embodiment 8, when a search space set to which the first control channel candidate in the present application belongs and a search space set to which the second control channel candidate in the present application belongs are the same, an index of the first control channel candidate is an index of the first control channel candidate in the search space set to which it belongs, and an index of the second control channel candidate is an index of the second control channel candidate in the search space set to which it belongs. when a search space set to which the first control channel candidate belongs and a search space set to which the second control channel candidate belongs are different, an index of the first control channel candidate is equal to an index of the search space set to which the first control channel candidate belongs, and an index of the second control channel candidate is equal to an index of the search space set to which the second control channel candidate belongs.

In one embodiment, "a search space set to which the first control channel candidate belongs and a search space set to which the second control channel candidate belongs are the same" means that: an index of a search space set to which the first control channel candidate belongs is equal to an index of a search space set to which the second control channel candidate belongs.

In one embodiment, "a search space set to which the first control channel candidate belongs and a search space set to which the second control channel candidate belongs are the same" means that: an ID of a search space set to which the first control channel candidate belongs is the same as an ID of a search space set to which the second control channel candidate belongs.

In one embodiment, "a search space set to which the first control channel candidate belongs and a search space set to which the second control channel candidate belongs are different" means that: an index of a search space set to which the first control channel candidate belongs is unequal to an index of a search space set to which the second control channel candidate belongs.

In one embodiment, "a search space set to which the first control channel candidate belongs and a search space set to which the second control channel candidate belongs are different" means that: an ID of a search space set to which the first control channel candidate belongs is different from an ID of a search space set to which the second control channel candidate belongs.

In one embodiment, "an index of the first control channel candidate in the search space set to which it belongs" refers to an index of the first control channel candidate among control channel candidates used for scheduling a same Serving Cell that are comprised in the search space set to which the first control channel candidate belongs, while "an index of the second control channel candidate in the search space set to which it belongs" refers to an index of the second control channel candidate among control channel candidates used for scheduling a same Serving Cell that are comprised in the search space set to which the second control channel candidate belongs.

In one embodiment, "an index of the first control channel candidate in the search space set to which it belongs" refers to an index of the first control channel candidate among control channel candidates used for carrying DCIs having the same value of CIF that are comprised in the search space set to which the first control channel candidate belongs, while "an index of the second control channel candidate in the search space set to which it belongs" refers to an index of the second control channel candidate among control channel candidates used for carrying DCIs having the same value of CIF that are comprised in the search space set to which the second control channel candidate belongs.

In one embodiment, a search space set to which the first control channel candidate belongs comprises Y1 control channel candidates, where "an index of the first control channel candidate in the search space set to which it belongs" refers to an index of the first control channel candidate among the Y1 control channel candidates, Y1 being a positive integer greater than 1, while "an index of the second control channel candidate in the search space set to which it belongs" refers to an index of the second control channel candidate among the Y1 control channel candidates.

In one embodiment, a search space set to which the first control channel candidate belongs comprises Y1 control channel candidates, where "an index of the first control channel candidate in the search space set to which it belongs" refers to an index of the first control channel candidate among the Y1 control channel candidates, while "an index of the second control channel candidate in the search space set to which it belongs" refers to an index of the second control channel candidate among the Y1 control channel candidates, Y1 being a positive integer greater than 1, and values of CIFs in DCIs respectively carried by the Y1 control channel candidates being equal.

In one embodiment, a search space set to which the first control channel candidate belongs comprises Y1 control channel candidates in a first time window, where "an index of the first control channel candidate in the search space set to which it belongs" refers to an index of the first control channel candidate among the Y1 control channel candidates, while "an index of the second control channel candidate in the search space set to which it belongs" refers to an index of the second control channel candidate among the Y1 control channel candidates, Y1 being a positive integer greater than 1. In one subsidiary embodiment of the above embodiment, values of CIFs in DCIs respectively carried by the Y1 control channel candidates are equal. In one subsidiary embodiment of the above embodiment, DCIs respectively carried by the Y1 control channel candidates are used for scheduling a same Serving Cell. In one subsidiary embodiment of the above embodiment, DCIs respectively carried by the Y1 control channel candidates are used for scheduling a same Carrier. In one subsidiary embodiment of the above embodiment, the first time window is a Slot to which the first control channel candidate belongs in time domain. In one subsidiary embodiment of the above embodiment, the first time window is a Span to which the first control channel candidate belongs in time domain. In one subsidiary embodiment of the above embodiment, the first time window is a Monitoring Occasion (MO) to which the first control channel candidate belongs in time domain. In one subsidiary embodiment of the above embodiment, the first time window comprises a positive integer number of time-domain symbol(s), and the number of symbol(s) comprised in the first time window is pre-defined or configurable.

In one embodiment, an index of a search space set to which the first control channel candidate belongs is a positive integer.

In one embodiment, an index of a search space set to which the first control channel candidate belongs is a non-negative integer.

In one embodiment, an index of a search space set to which the first control channel candidate belongs is an integer greater than 0 and less than 40.

In one embodiment, an index of a search space set to which the first control channel candidate belongs is an ID of the search space set to which the first control channel candidate belongs.

In one embodiment, an index of a search space set to which the second control channel candidate belongs is a positive integer.

In one embodiment, an index of a search space set to which the second control channel candidate belongs is a non-negative integer.

In one embodiment, an index of a search space set to which the second control channel candidate belongs is an integer greater than 0 and less than 40.

In one embodiment, an index of a search space set to which the second control channel candidate belongs is an ID of the search space set to which the second control channel candidate belongs.

**Embodiment 9**

Embodiment 9 illustrates a schematic diagram illustrating a relation between a second control channel candidate and a third control channel candidate according to one embodiment of the present application, as shown in FIG. 9. In FIG. 9, as shown in Case A and Case B, the horizontal axis represents time, and the broken line with arrow indicates corresponding scheduling relationship. In Case A, the rectangle filled with dots represents a third control channel candidate, the rectangle filled with reticles represents a second control channel candidate, and the rectangle filled with crosses represents time-domain resources indicated by DCI carried by the third control channel candidate, and the rectangle filled with slashes represents time-domain resources indicated by DCI carried by the second control channel candidate; in Case B, the rectangle filled with dots represents a third control channel candidate, the rectangle filled with reticles represents a second control channel candidate, and the rectangle filled with crosses represents time-domain resources indicated by DCI carried by the third control channel candidate and time-domain resources indicated by DCI carried by the second control channel candidate, where the time-domain resources indicated by the DCI carried by the third control channel candidate and the time-domain resources indicated by the DCI carried by the second control channel candidate are totally overlapping.

In Embodiment 9, the first information block in the present application is used to determine that the second control channel candidate in the present application and a third control channel candidate are linked, and the first information block is used to determine a linking type between the second control channel candidate and the third control channel candidate, the third control channel candidate being a control channel candidate other than the second control channel candidate; there exists overlapping time-domain resources between time-domain resources indicated by DCI carried by the second control channel candidate and time-domain resources indicated by DCI carried by the third control channel candidate.

In one embodiment, the statement in the claims that "the first information block is used to determine that the second control channel candidate and a third control channel candidate are linked" comprises the following meaning: the first information block is used by the first node in the present application for determining that the second control channel candidate and the third control channel candidate are linked.

In one embodiment, the statement in the claims that "the first information block is used to determine that the second control channel candidate and a third control channel candidate are linked" comprises the following meaning: the first information block comprises a switch (on/off or enable/disable) of linkage between control channel candidates, the first information block indicating that the linking between the second control channel candidate and the third control channel candidate is on/enabled.

In one embodiment, the statement in the claims that "the first information block is used to determine that the second control channel candidate and a third control channel candidate are linked" comprises the following meaning: the first information block comprises a switch (on/off or enable/disable) of linkage between control channel candidates, the first information block indicating that the linking between the second control channel candidate and the third control channel candidate is on/enabled, the second control channel candidate and the third control channel candidate being linked under a pre-defined rule.

In one embodiment, the statement in the claims that "the first information block is used to determine that the second control channel candidate and a third control channel candidate are linked" comprises the following meaning: the first information block is used to determine a rule of linkage for the second control channel candidate and the third control channel candidate being linked.

In one embodiment, the statement in the claims that "the first information block is used to determine that the second control channel candidate and a third control channel candidate are linked" comprises the following meaning: the first information block explicitly indicates that the second control channel candidate and the third control channel candidate are linked.

In one embodiment, the statement in the claims that "the first information block is used to determine that the second control channel candidate and a third control channel candidate are linked" comprises the following meaning: the first information block implicitly indicates that the second control channel candidate and the third control channel candidate are linked.

In one embodiment, the statement in the claims that "the first information block is used to determine a linking type between the second control channel candidate and the third control channel candidate" comprises the following meaning: the first information block is used by the first node in the present application for determining the linking type between the second control channel candidate and the third control channel candidate.

In one embodiment, the statement in the claims that "the first information block is used to determine a linking type between the second control channel candidate and the third control channel candidate" comprises the following meaning: the first information block is used for explicitly indicating the linking type between the second control channel candidate and the third control channel candidate.

In one embodiment, the statement in the claims that "the first information block is used to determine a linking type between the second control channel candidate and the third control channel candidate" comprises the following meaning: the first information block is used for implicitly indicating the linking type between the second control channel candidate and the third control channel candidate.

In one embodiment, the first information block comprises a first IE, the first IE being one Information Element (IE) comprised in the first information block, and the first IE comprises two fields which are respectively used to determine that the second control channel candidate and a third control channel candidate are linked and a linking type between the second control channel candidate and the third control channel candidate.

In one embodiment, the first information block comprises a first field, the first field being one field comprised in the first information block, and the first field is used to determine that the second control channel candidate and the third control channel candidate are linked and a linking type between the second control channel candidate and the third control channel candidate.

In one embodiment, the first information block comprises Q sub-information-block(s), Q being a positive integer, and the Q sub-information-block(s) being used to respectively determine Q pair(s) of control channel candidates and Q linking type indicator(s); each of the Q pair(s) of control channel candidates comprises two linked control channel candidates, and each one of the Q linking type indicator(s) is used to indicate a linking type between a pair of control channel candidates; the second control channel candidate and the third control channel candidate belong to a pair of control channel candidates of the Q pair(s) of control channel candidates, and a target sub-information-block is one of the Q sub-information-block(s) being used to determine the pair of control channel candidates to which the second control channel candidate and the third control channel candidate belong, the target sub-information-block being used to determine a target linking type indicator out of the Q linking type indicator(s), the target linking type indicator being used to indicate a linking type between the second control channel candidate and the third control channel candidate.

In one embodiment, the first information block comprises a first Add List and a first Release List, where the first Add List and the first Release List are used to determine Q sub-information-block(s), Q being a positive integer, and the Q sub-information-block(s) being used to respectively determine Q pair(s) of control channel candidates and Q linking type indicator(s); each of the Q pair(s) of control channel candidates comprises two linked control channel candidates, and each one of the Q linking type indicator(s) is used to indicate a linking type between a pair of control channel candidates; the second control channel candidate and the third control channel candidate belong to a pair of control channel candidates of the Q pair(s) of control channel candidates, and a target sub-information-block is one of the Q sub-information-block(s) being used to determine the pair of control channel candidates to which the second control channel candidate and the third control channel candidate belong, the target sub-information-block being used to determine a target linking type indicator out of the Q linking type indicator(s), the target linking type indicator being used to indicate a linking type between the second control channel candidate and the third control channel candidate.

In one embodiment, an index of the third control channel candidate and an index of the second control channel candidate are different.

In one embodiment, an index of the third control channel candidate in a search space set to which the third control channel candidate belongs and an index of the second control channel candidate in a search space set to which the second control channel candidate belongs are different.

In one embodiment, a slot to which the third control channel candidate belongs in time domain is different from a slot to which the second control channel candidate belongs in time domain.

In one embodiment, a slot to which the third control channel candidate belongs in time domain is different from a span to which the second control channel candidate belongs in time domain.

In one embodiment, a slot to which the third control channel candidate belongs in time domain is different from a Monitoring Occasion (MO) to which the second control channel candidate belongs in time domain.

In one embodiment, an index of a search space set to which the third control channel candidate belongs is different from an index of a search space set to which the second control channel candidate belongs.

In one embodiment, CCE(s) occupied by the second control channel candidate and CCE(s) occupied by the third control channel candidate are different.

In one embodiment, the second control channel candidate and the third control channel candidate occupy different time-frequency domain resources in time-frequency domain.

In one embodiment, the second control channel candidate and the third control channel candidate respectively belong to two different Search Space Sets.

In one embodiment, a Control Resource Set (CORESET) corresponding to a Search Space Set to which the second control channel candidate belongs and a CORESET corresponding to a Search Space Set to which the third control channel candidate belongs are different.

In one embodiment, Quasi-Colocation (QCL) of a reference signal comprised in the second control channel candidate and QCL of a reference signal comprised in the third control channel candidate are different.

In one embodiment, CCE(s) occupied by the second control channel candidate belongs(belong) to a first control resource set (CORESET), while CCE(s) occupied by the third control channel candidate belongs(belong) to a second control resource set (CORESET); a CORESET Pool Index provided to the first CORESET is unequal to a CORESET Pool Index provided to the second CORESET.

In one embodiment, the statement in the claims that "there exists overlapping time-domain resources between time-domain resources indicated by DCI carried by the second control channel candidate and time-domain resources indicated by DCI carried by the third control channel candidate" comprises the following meaning: the first node assumes that between time-domain resources indicated by DCI carried by the second control channel candidate and time-domain resources indicated by DCI carried by the third control channel candidate there exists overlapping time-domain resources.

In one embodiment, a DCI Format of Downlink Control Information (DCI) carried by the second control channel candidate is the same as a DCI Format of DCI carried by the third control channel candidate.

In one embodiment, a DCI Format of Downlink Control Information (DCI) carried by the second control channel candidate is different from a DCI Format of DCI carried by the third control channel candidate.

In one embodiment, DCI carried by the second control channel candidate and DCI carried by the third control channel candidate indicate a same HARQ process number.

In one embodiment, DCI carried by the second control channel candidate and DCI carried by the third control channel candidate indicate different HARQ process numbers.

In one embodiment, DCI carried by the second control channel candidate and DCI carried by the third control channel candidate indicate a same Transport Block (TB).

In one embodiment, DCI carried by the second control channel candidate and DCI carried by the third control channel candidate are used to schedule one or two same TB(s).

In one embodiment, DCI carried by the second control channel candidate and DCI carried by the third control channel candidate indicate a same Downlink Assignment Index (DAI) value.

In one embodiment, DCI carried by the second control channel candidate and DCI carried by the third control channel candidate respectively indicate different DAI values.

In one embodiment, DCI carried by the second control channel candidate and DCI carried by the third control channel candidate indicate a same Total Downlink Assignment Index (T-DAI) value.

In one embodiment, DCI carried by the second control channel candidate and DCI carried by the third control channel candidate respectively indicate different T-DAI values.

In one embodiment, DCI carried by the second control channel candidate and DCI carried by the third control channel candidate indicate a same Counter Downlink Assignment Index (C-DAI) value.

In one embodiment, DCI carried by the second control channel candidate and DCI carried by the third control channel candidate respectively indicate different C-DAI values.

In one embodiment, the first transceiver transmits a first HARQ feedback, where the first HARQ feedback comprises a HARQ-ACK of a PDSCH; DCI carried by the second control channel candidate and DCI carried by the third control channel candidate respectively indicate different Downlink Assignment Index (DAI) values, where the DAI indicated by the DCI which is received later between the DCI carried by the second control channel candidate and the DCI carried by the third control channel candidate is used to determine HARQ-ACK bit(s) comprised in the first HARQ feedback.

In one embodiment, the first transceiver transmits a first HARQ feedback and a second HARQ feedback, where the first HARQ feedback and the second HARQ feedback both comprise a HARQ-ACK of a same PDSCH; DCI carried by the second control channel candidate and DCI carried by the third control channel candidate respectively indicate different Downlink Assignment Index (DAI) values; when the same PD SCH is correctly decoded, both the first HARQ feedback and the second HARQ feedback comprise an Acknowledgement (ACK); when the same PDSCH is not correctly decoded, both the first HARQ feedback and the second HARQ feedback comprise a Non-Acknowledgement (NACK).

In one embodiment, the statement in the claims that "there exists overlapping time-domain resources between time-domain resources indicated by DCI carried by the second control channel candidate and time-domain resources indicated by DCI carried by the third control channel candidate" comprises the following meaning: there is one time-domain symbol being occupied by both time-domain resources indicated by DCI carried by the second control channel candidate and time-domain resources indicated by DCI carried by the third control channel candidate.

In one embodiment, the statement in the claims that "there exists overlapping time-domain resources between time-domain resources indicated by DCI carried by the second control channel candidate and time-domain resources indicated by DCI carried by the third control channel candidate" comprises the following meaning:

time-domain resources indicated by DCI carried by the second control channel candidate and time-domain resources indicated by DCI carried by the third control channel candidate are totally the same.

In one embodiment, the statement in the claims that "there exists overlapping time-domain resources between time-domain resources indicated by DCI carried by the second control channel candidate and time-domain resources indicated by DCI carried by the third control channel candidate" comprises the following meaning: time-frequency resources indicated by DCI carried by the second control channel candidate and time-frequency resources indicated by DCI carried by the third control channel candidate are totally the same.

In one embodiment, the statement in the claims that "there exists overlapping time-domain resources between time-domain resources indicated by DCI carried by the second control channel candidate and time-domain resources indicated by DCI carried by the third control channel candidate" comprises the following meaning: there is one RE belonging to both time-frequency resources indicated by DCI carried by the second control channel candidate and time-frequency resources indicated by DCI carried by the third control channel candidate.

In one embodiment, the statement in the claims that "there exists overlapping time-domain resources between time-domain resources indicated by DCI carried by the second control channel candidate and time-domain resources indicated by DCI carried by the third control channel candidate" comprises the following meaning: time-frequency resources indicated by DCI carried by the second control channel candidate and time-frequency resources indicated by DCI carried by the third control channel candidate are Non-Orthogonal.

**Embodiment 10**

Embodiment 10 illustrates a schematic diagram of a first threshold according to one embodiment of the present application, as shown in FIG. 10. In FIG. 10, the first column on the left represents subcarrier spacings, and the second column on the left represents possible thresholds; the subcarrier spacing in a row in bold is a subcarrier spacing of subcarriers occupied by the first control channel candidate in frequency domain, and the threshold in a row in bold is a first threshold, where $a_0$, $a_1$, $a_2$ and $a_3$ respectively denote four pre-defined positive integers.

In Embodiment 10, CCEs occupied by the first control channel candidate in the present application and the second control channel candidate in the present application belong to a target time window in time domain, and a total number of times of monitoring counted by the first node in the present application in the target time window is no greater than a first threshold, the first threshold being a positive integer greater than 1; a subcarrier spacing of subcarriers occupied by the first control channel candidate in frequency domain is used to determine the first threshold.

In one embodiment, the target time window is a Slot.

In one embodiment, the target time window is a Span.

In one embodiment, the target time window is a Monitoring Occasion (MO).

In one embodiment, the target time window comprises a positive integer number of Symbol(s).

In one embodiment, the target time window comprises more than one Slot.

In one embodiment, the statement in the claims that "a total number of times of monitoring by the first node counted in the target time window" comprises: a total number of PDCCH Candidates being monitored by the first node that is counted in the target time window.

In one embodiment, the statement in the claims that "a total number of times of monitoring by the first node counted in the target time window" comprises: a total number of times of monitoring on PDCCH by the first node counted in the target time window.

In one embodiment, the statement in the claims that "a total number of times of monitoring by the first node counted in the target time window" comprises: a total number of times of blind detecting on PDCCH by the first node counted in the target time window.

In one embodiment, the statement in the claims that "a total number of times of monitoring by the first node counted in the target time window" comprises: a total number of times of PDCCH Decoding by the first node counted in the target time window.

In one embodiment, the statement in the claims that "a total number of times of monitoring by the first node counted in the target time window" comprises: a total number of times of monitoring on all Serving Cells by the first node counted in the target time window.

In one embodiment, the statement in the claims that "a total number of times of monitoring by the first node counted in the target time window" comprises: a total number of times of monitoring on all Scheduling Cells by the first node counted in the target time window.

In one embodiment, the statement in the claims that "a total number of times of monitoring by the first node counted in the target time window" comprises: a total number of times of monitoring on one Serving Cell by the first node counted in the target time window.

In one embodiment, the first threshold is a maximum number of monitoring times that the first node can support in the target time window.

In one embodiment, the first threshold is a Budget of the first node for a number of monitoring times in the target time window.

In one embodiment, the first threshold is equal to $M_{PDCCH}^{max,slot,\mu}$.

In one embodiment, the first threshold is equal to $M_{PDCCH}^{max,(X,Y),\mu}$ .

In one embodiment, the first threshold is equal to $M_{PDCCH}^{total,slot,\mu}$ .

In one embodiment, the first threshold is equal to $M_{PDCCH}^{total,(X,Y),\mu}$ .

In one embodiment, the first node assumes that a total number of times of monitoring counted in the target time window is no greater than the first threshold.

In one embodiment, a subcarrier spacing (SCS) of subcarriers occupied by the first control channel candidate in frequency domain is equal to one of 15kHz, 30kHz, 60kHz, 120kHz or 240kHz.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain is used by the first node in the present application to determine the first threshold.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain is used by the second node in the present application to determine the first threshold.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain determines the first threshold based on a corresponding relationship.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain is equal to a first SCS, the first SCS being one of X candidate SCSs, where X is a positive integer greater than 1; the X candidate SCSs respectively correspond to X candidate thresholds, any one of the X candidate thresholds is a positive integer, and the first threshold is a candidate threshold corresponding to the first SCS among the X candidate thresholds. In one subsidiary embodiment of the above embodiment, the X candidate SCSs and the X candidate thresholds are pre-defined. In one subsidiary embodiment of the above embodiment, the X candidate SCSs and the X candidate thresholds are configurable. In one subsidiary embodiment of the above embodiment, the one-to-one correspondence relations between the X candidate SCSs and the X candidate thresholds are pre-defined.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain is used to determine a characteristic threshold, the characteristic threshold being used together with a number of serving cells simultaneously supported by the first node to determine the first threshold, where the characteristic threshold is a positive integer greater than 1.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain is used to determine a characteristic threshold, the characteristic threshold being used together with a number of serving cells simultaneously supported by the first node and a number of CORESET Pool indexes supported by the first node to determine the first threshold, where the characteristic threshold is a positive integer greater than 1.

In one embodiment, the statement in the claims that "a subcarrier spacing of subcarriers occupied by the first control channel candidate in frequency domain is used to determine the first threshold" comprises the following meaning: a subcarrier spacing of subcarriers occupied by the first control channel candidate in frequency domain is used to determine a characteristic threshold, the characteristic threshold being used together with a number of CORESET Pool indexes supported by the first node to determine the first threshold, where the characteristic threshold is a positive integer greater than 1.

## Embodiment 11

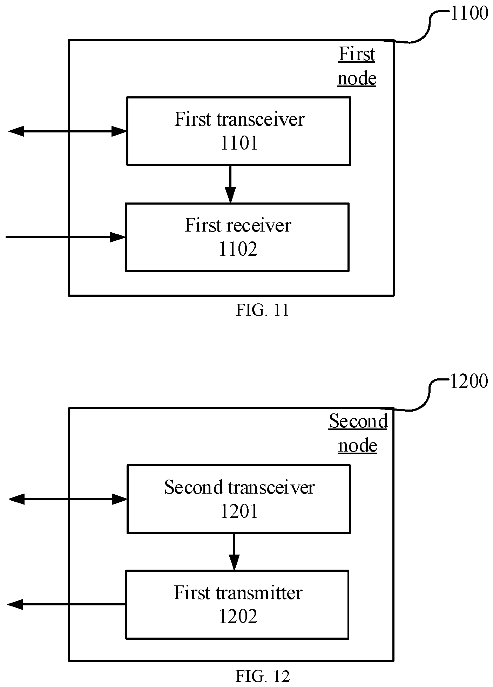

Embodiment 11 illustrates a structure block diagram of a processing device in a first node in an example, as shown in FIG. 11. In FIG. 11, a processing device 1100 in the first node comprises a first transceiver 1101 and a first receiver 1102.

The first transceiver 1101 comprises the transmitter/receiver 456 (comprising the antenna 460), the transmitting processor 455, the receiving processor 452 and the controller/processor 490 in FIG. 4 of the present application; the first receiver 1102 comprises the transmitter/receiver 456 (comprising the antenna 460), the receiving processor 452 and the controller/processor 490 in FIG. 4 of the present application.

In Embodiment 11, the first transceiver 1101 receives a first information block, the first information block being used to determine M1 control channel candidates, and any control channel candidate among the M1 control channel candidates occupying at least one CCE, M1 being a positive integer greater than 1; and the first receiver 1102 monitors a first control channel candidate, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, when the second control channel candidate is linked with a control channel candidate other than the second control channel candidate, Quasi-Colocation (QCL) of a reference signal comprised in the second control channel candidate is different from QCL of a reference signal comprised in the control channel candidate linked with the second control channel candidate.

In one embodiment, an index of a control resource set (CORESET) applied by a search space set to which the first control channel candidate belongs and an index of a CORESET applied in a search space set to which the second control channel candidate belongs are the same; a value of a carrier indicator field comprised in DCI carried by the first control channel candidate is equal to a value of a carrier indicator field comprised in DCI carried by the second control channel candidate.

In one embodiment, when a search space set to which the first control channel candidate belongs and a search space set to which the second control channel candidate belongs are the same, an index of the first control channel candidate is an index of the first control channel candidate in the search space set to which it belongs, and an index of the second control channel candidate is an index of the second control channel candidate in the search space set to which it belongs, when a search space set to which the first control channel candidate belongs and a search space set to which the second control channel candidate belongs are different, an index of the first control channel candidate is equal to an index of the search space set to which the first control channel candidate belongs, and an index of the second control channel candidate is equal to an index of the search space set to which the second control channel candidate belongs.

In one embodiment, the first transceiver 1101 transmits a second information block; herein, the second information block is used to indicate at least one of whether the first node supports two control channel candidates being mutually linked or a linking type supported by the first node for mutually linked control channel candidates.

In one embodiment, the first information block is used to determine that the second control channel candidate and a third control channel candidate are linked, and the first information block is used to determine a linking type between the second control channel candidate and the third control channel candidate, the third control channel candidate being a control channel candidate other than the second control channel candidate; there exists overlapping time-domain resources between time-domain resources indicated by DCI carried by the second control channel candidate and time-domain resources indicated by DCI carried by the third control channel candidate.

In one embodiment, each CCE occupied by the first control channel candidate and the second control channel candidate belongs to a target time window in time domain, and a total number of times of monitoring counted by the first node in the target time window is no greater than a first threshold, the first threshold being a positive integer greater than 1; a subcarrier spacing of subcarriers occupied by the first control channel candidate in frequency domain is used to determine the first threshold.

## Embodiment 12

Embodiment 12 illustrates a structure block diagram of a processing device in a second node in an example, as shown in FIG. 12. In FIG. 12, a processing device 1200 in the second node comprises a second transceiver 1201 and a first transmitter 1202.

The second transceiver 1201 comprises the transmitter/receiver 416 (comprising the antenna 460), the receiving processor 412, the transmitting processor 415 and the controller/processor 440 in FIG. 4 of the present application; the first transmitter 1202 comprises the transmitter/receiver 416 (comprising the antenna 460), the transmitting processor 415 and the controller/processor 440 in FIG. 4 of the present application.

In Embodiment 12, the second transceiver 1201 transmits a first information block, the first information block being used to indicate M1 control channel candidates, and any control channel candidate among the M1 control channel candidates occupying at least one CCE, M1 being a positive integer greater than 1; the first transmitter 1202 determines a first control channel candidate, the first control channel candidate being one of the M1 control channel candidates; herein, a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

In one embodiment, when the second control channel candidate is linked with a control channel candidate other than the second control channel candidate, Quasi-Colocation (QCL) of a reference signal comprised in the second control channel candidate is different from QCL of a reference signal comprised in the control channel candidate linked with the second control channel candidate.

In one embodiment, an index of a control resource set (CORESET) applied by a search space set to which the first control channel candidate belongs and an index of a CORESET applied in a search space set to which the second control channel candidate belongs are the same; a value of a carrier indicator field comprised in DCI carried by the first control channel candidate is equal to a value of a carrier indicator field comprised in DCI carried by the second control channel candidate.

In one embodiment, when a search space set to which the first control channel candidate belongs and a search space set to which the second control channel candidate belongs are the same, an index of the first control channel candidate is an index of the first control channel candidate in the search space set to which it belongs, and an index of the second control channel candidate is an index of the second control channel candidate in the search space set to which it belongs, when a search space set to which the first control channel candidate belongs and a search space set to which the second control channel candidate belongs are different, an index of the first control channel candidate is equal to an index of the search space set to which the first control channel candidate belongs, and an index of the second control channel candidate is equal to an index of the search space set to which the second control channel candidate belongs.

In one embodiment, the first transceiver 1201 receives a second information block; herein, the second information block is used to indicate at least one of whether a transmitter transmitting the second information block supports two control channel candidates being mutually linked or a linking type supported by the transmitter transmitting the second information block for mutually linked control channel candidates.

In one embodiment, the first information block is used to indicate that the second control channel candidate and a third control channel candidate are linked, and the first information block is used to indicate a linking type between the second control channel candidate and the third control channel candidate, the third control channel candidate being a control channel candidate other than the second control channel candidate; there exists overlapping time-domain resources between time-domain resources indicated by DCI carried by the second control channel candidate and time-domain resources indicated by DCI carried by the third control channel candidate.

In one embodiment, each CCE occupied by the first control channel candidate and the second control channel candidate belongs to a target time window in time domain, and a total number of times of monitoring counted by the monitor for the first control channel candidate in the target time window is no greater than a first threshold, the first threshold being a positive integer greater than 1; a subcarrier spacing of subcarriers occupied by the first control channel candidate in frequency domain is used to determine the first threshold.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node or the second node, or UE or terminal includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network equipment in the present application includes but is not limited to macrocellular base stations, micro-cellular base stations, home base stations, relay base station, eNB, gNB, Transmitter Receiver Point (TRP), relay satellite, satellite base station, airborne base station and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

**Claims**

1. A first node for wireless communications, comprising:

   a first transceiver, receiving a first information block, the first information block being used to determine M1 control channel candidates, and any control channel candidate among the M1 control channel candidates occupying at least one CCE, M1 being a positive integer greater than 1; and
   a first receiver, monitoring a first control channel candidate, the first control channel candidate being one of the M1 control channel candidates; wherein a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

2. The first node according to claim 1, wherein when the second control channel candidate is linked with a control channel candidate other than the second control channel candidate, Quasi-Colocation (QCL) of a reference signal comprised in the second control channel candidate is different from QCL of a reference signal comprised in the control channel candidate linked with the second control channel candidate.

3. The first node according to claim 1 or 2, wherein an index of a control resource set (CORESET) applied by a search space set to which the first control channel candidate belongs and an index of a CORESET applied by a search space set to which the second control channel candidate belongs are the same; a value of a carrier indicator field comprised in DCI carried by the first control channel candidate is equal to a value of a carrier indicator field comprised in DCI carried by the second control channel candidate.

4. The first node according to any of claims 1-3, wherein when a search space set to which the first control channel candidate belongs and a search space set to which the second control channel candidate belongs are the same, an index of the first control channel candidate is an index of the first control channel candidate in the search space set to which the first control channel candidate belongs, and an index of the second control channel candidate is an index of the second control channel candidate in the search space set to which the second control channel candidate belongs; when a search space set to which the first control channel candidate belongs and a search space set to which the second control channel candidate belongs are different, the index of the first control channel candidate is equal to an index of the search space set to which the first control channel candidate belongs, and the index of the second control channel candidate is equal to an index of the search space set to which the second control channel candidate belongs.

5. The first node according to any of claims 1-4, wherein the first transceiver transmits a second information block; wherein the second information block is used to indicate at least one of whether the first node supports two control channel candidates being mutually linked or a linking type supported by the first node for mutually linked control channel candidates.

6. The first node according to any of claims 1-5, wherein the first information block is used to determine that the second control channel candidate and a third control channel candidate are linked, and the first information block is used to determine a linking type between the second control channel candidate and the third control channel candidate, the third control channel candidate being a control channel candidate other than the second control channel candidate; there exists overlapping time-domain resources between time-domain resources indicated by DCI carried by the second control channel candidate and time-domain resources indicated by DCI carried by the third control channel candidate.

7. The first node according to any of claims 1-6, wherein each CCE occupied by the first control channel candidate and the second control channel candidate belongs to a target time window in time domain, and a total number of times of monitoring counted by the first node in the target time window is no greater than a first threshold, the first threshold being a positive integer greater than 1; a subcarrier spacing of subcarriers occupied by the first control channel candidate in frequency domain is used to determine the first threshold.

8. A second node for wireless communications, comprising:

a second transceiver, transmitting a first information block, the first information block being used to indicate M1 control channel candidates, and any control channel candidate among the M1 control channel candidates occupying at least one CCE, M1 being a positive integer greater than 1; and

a first transmitter, determining a first control channel candidate, the first control channel candidate being one of the M1 control channel candidates;

wherein a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

9. A method in a first node for wireless communications, comprising:

receiving a first information block, the first information block being used to determine M1 control channel candidates, and any control channel candidate among the M1 control channel candidates occupying at least one CCE, M1 being a positive integer greater than 1; and

monitoring a first control channel candidate, the first control channel candidate being one of the M1 control channel candidates;

wherein a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

10. A method in a second node for wireless communications, comprising:

transmitting a first information block, the first information block being used to indicate M1 control channel candidates, and any control channel candidate among the M1 control channel candidates occupying at least one CCE, M1 being a positive integer greater than 1; and

determining a first control channel candidate, the first control channel candidate being one of the M1 control channel candidates;

wherein a second control channel candidate is a control channel candidate that occupies the same CCE(s) as the first control channel candidate; the first control channel candidate and the second control channel candidate have identical scrambling, and a size of a format of DCI carried by the first control channel candidate is the same as a size of a format of DCI carried by the second control channel candidate; an index of the first control channel candidate and an index of the second control channel candidate are unequal; a linking status of the second control channel candidate is used to determine whether the second control channel candidate is counted for monitoring, where the linking status of the second control channel candidate comprises at least one of whether the second control channel candidate is linked with a control channel candidate, a control channel candidate linked with the second control channel candidate or a linking type of the second control channel candidate.

100

receiving first information block ⎯ 101

monitoring first control channel candidate ⎯ 102

FIG. 1

5GS/EPS 200

HSS/UDM ⎯ 220

NR-RAN/EUTRAN **202**

UE ⎯ 201

NR/evolved Node B ⎯ 203

MME/AMF/SMF ⎯ 211

other MMEs/AMFs/SMFs ⎯ 214

UE ⎯ 241

other NR/evolved Nodes B ⎯ 204

S-GW/UPF ⎯ 212

P-GW/UPF ⎯ 213

Internet service ⎯ 230

5GC/EPC **210**

FIG. 2

Control plane 300

L3

RRC ⎯ 306

305

L2

PDCP ⎯ 304

RLC ⎯ 303

MAC ⎯ 302

L1

PHY ⎯ 301

User plane 350

L2

SDAP ⎯ 356

355

PDCP ⎯ 354

RLC ⎯ 353

MAC ⎯ 352

L1

PHY ⎯ 351

FIG. 3

**410**

**450**

**420**

**460**

**415**

**416**

**456**

**455**

Transmitting processor

Transmi tter

Receiver

Transmi tter

Receiver

Transmitting processor

**440**

**490**

**420**

**460**

Controller /processor

Controller /procesor

Transmi tter

Receiver

Transmi tter

Receiver

Memory

Receiving processor

Receiving processor

Memory

**430**

**412**

**416**

**456**

**452**

**480**

FIG. 4

Second node N500

First node U550

S551. transmitting second information block

←———second information block———

S501. receiving second information block

S502. transmitting first information block

———first information block———→

S552. receiving first information block

S503. determining first control channel candidate

S553. monitoring first control channel candidate

End

End

FIG. 5

TRP#1                                    TRP#2

quasi co-location of second control channel candidate

quasi co-location of control channel candidate linked with second control channel candidate

FIG. 6

Frequency domain

CIF=a

CIF=a

first control channel candidate

second control channel candidate

control channel candidate linked with second control channel candidate

Time domain

FIG. 7

CCE occupied by first control channel candidate and second control channel candidate

CCE occupied by a control channel candidate in search space set #i

CCE occupied by a control channel candidate in search space set #i

CCE occupied by a control channel candidate in search space set #(i+1)

CCE occupied by first control channel candidate and second control channel candidate

FIG. 8

third control channel candidate

second control channel candidate

time-domain resources indicated by third control channel candidate

time-domain resources indicated by second control channel candidate

third control channel candidate

second control channel candidate

time-domain resources indicated by second control channel candidate/time-domain resources indicated by third control channel candidate

Case A

Case B

FIG. 9

| Subcarrier Spacing (kHz) | First threshold |
|---|---|
| 15 | $a_0$ |
| **30** | $a_1$ |
| 60 | $a_2$ |
| 120 | $a_3$ |

FIG. 10

FIG. 11

FIG. 12

## INTERNATIONAL SEARCH REPORT

International application No.

**PCT/CN2021/119745**

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; 3GPP; IEEE: 控制信道, 备选, 候选, 新空口技术, 物理下行控制信道, 扰码, 下行链路控制信息, 索引, 关联, 类型, PDCCH, CCE, DCI, candidat+, alternativ+, scrambler?, coreset?, associat+, NR, typ+

### C. DOCUMENTS CONSIDERED TO BE RELEVANT

| Category* | Citation of document, with indication, where appropriate, of the relevant passages | Relevant to claim No. |
|---|---|---|
| X | CN 110972283 A (HUAWEI TECHNOLOGIES CO., LTD.) 07 April 2020 (2020-04-07) description paragraphs [0235]-[0435] | 1-10 |
| A | CN 110505706 A (LONGBO COMMUNICATION TECHNICAL CO., LTD.) 26 November 2019 (2019-11-26) entire document | 1-10 |
| A | CN 111327405 A (LONGBO COMMUNICATION TECHNICAL CO., LTD.) 23 June 2020 (2020-06-23) entire document | 1-10 |
| A | US 2016057742 A1 (HUAWEI TECHNOLOGY CO., LTD.) 25 February 2016 (2016-02-25) entire document | 1-10 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 November 2021** | **07 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/119745**

| Patent document cited in search report | | | Publication date (day/month/year) | Patent family member(s) | | | Publication date (day/month/year) |
|---|---|---|---|---|---|---|---|
| CN | 110972283 | A | 07 April 2020 | WO | 2020063910 | A1 | 02 April 2020 |
| | | | | EP | 3855835 | A1 | 28 July 2021 |
| | | | | US | 2021218526 | A1 | 15 July 2021 |
| | | | | BR | 112021006075 | A2 | 06 July 2021 |
| | | | | VN | 78555 | A | 25 June 2021 |
| CN | 110505706 | A | 26 November 2019 | US | 2019357054 | A1 | 21 November 2019 |
| | | | | US | 10904768 | B2 | 26 January 2021 |
| CN | 111327405 | A | 23 June 2020 | US | 2020196293 | A1 | 18 June 2020 |
| US | 2016057742 | A1 | 25 February 2016 | US | 9912451 | B2 | 06 March 2018 |
| | | | | AU | 2013389278 | A1 | 03 December 2015 |
| | | | | EP | 2995031 | A1 | 16 March 2016 |
| | | | | AU | 2013389278 | B2 | 20 April 2017 |
| | | | | EP | 2995031 | B1 | 12 September 2018 |
| | | | | WO | 2014180506 | A1 | 13 November 2014 |

Form PCT/ISA/210 (patent family annex) (January 2015)